(19) Europäisches Patentamt
European Patent Office
Office européen des brevets

(11) EP 4 442 713 A1

(12) **EUROPEAN PATENT APPLICATION**
published in accordance with Art. 153(4) EPC

(43) Date of publication:
**09.10.2024 Bulletin 2024/41**

(21) Application number: **22901423.8**

(22) Date of filing: **01.12.2022**

(51) International Patent Classification (IPC):
***C08C 19/00*** *(2006.01)* ***C08F 4/44*** *(2006.01)*
***C08F 212/00*** *(2006.01)* ***C08F 236/04*** *(2006.01)*
***C08K 3/013*** *(2018.01)*

(52) Cooperative Patent Classification (CPC):
**C08C 19/00; C08F 4/44; C08F 212/00; C08F 236/04; C08K 3/013**

(86) International application number:
**PCT/JP2022/044472**

(87) International publication number:
**WO 2023/100993 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.12.2021 JP 2021196625**

(71) Applicant: **NIPPON STEEL CHEMICAL & MATERIAL CO., LTD.**
**Tokyo 103-0027 (JP)**

(72) Inventors:
- **KAWABE, Masanao**
  **Tokyo 103-0027 (JP)**
- **KURATOMI, Tadashi**
  **Tokyo 103-0027 (JP)**

(74) Representative: **Kraus & Lederer PartGmbB**
**Thomas-Wimmer-Ring 15**
**80539 München (DE)**

# (54) MODIFIED VINYL AROMATIC COPOLYMER, METHOD FOR PRODUCING SAME, MODIFIED CONJUGATED DIENE COPOLYMER OBTAINED FROM SAME, RESIN COMPOSITION, CROSSLINKED RESIN AND STRUCTURAL MEMBER

(57) To provide a modified vinylaromatic copolymer which can be used in production of copolymer rubber and which has reactivity and solubility, and a copolymer rubber material obtained therefrom, which simultaneously has processability, strength and homogeneity. A modified vinylaromatic copolymer containing a structural unit (a) derived from a divinylaromatic compound, a structural unit (b) derived from a monovinylaromatic compound, and a structural unit (c) derived from a conjugated diene compound, wherein 95% by mol or more of the structural unit (a) is a crosslinked structural unit (a1) represented by the following formula (1), the copolymer is modified by at least one functional group selected from the group consisting of an amino group, an alkoxysilyl group, and a hydroxyl group, and 30% by mol or more of the functional group is bound to the structural unit (c) derived from a conjugated diene compound to provide modification, and a number average molecular weight Mn is 500 to 30,000.

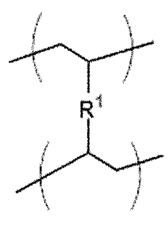

(1)

EP 4 442 713 A1

## Description

### Technical Field

The present invention relates to a modified vinylaromatic copolymer having a branched structure, and a method for producing the copolymer, as well as a modified conjugated diene-based copolymer excellent in processability and excellent in tensile strength and wear resistance, and a resin composition obtained from the copolymer, a crosslinked resin product obtained by crosslinking the composition, and a structural member.

### Background Art

A compound having a plurality of vinyl groups in the molecule allows for easy progression of an intermolecular crosslinking reaction due to polymerization. Such a characteristic can be utilized to form a crosslinked article by addition of such a compound to a polymerization system and copolymerization thereof, and thus insolubilize a polymerized product and/or impart functionality.

Examples of such a compound having a plurality of vinyl groups in the molecule include divinylbenzene, and such a compound can be used in the form of an ion-exchange resin obtained by adding a small amount of such a compound to a styrene polymerization system for copolymerization and furthermore introducing a functional group such as a sulfonic acid group thereinto. As other examples, such a compound is used as a crosslinking agent for styrene-based resins such as synthetic rubber, ABS resins, MBS resins, and unsaturated polyester resins, or as a modifying agent for polyethylene.

As another example, it is also expected to impart functionality to a thermoplastic resin by a reaction of a polyfunctional vinylaromatic copolymer having a branched structure, and a thermoplastic resin.

For example, conjugated diene-based rubber such as SBR (styrene-butadiene rubber), BR (butadiene rubber), IR (isoprene rubber), and styrene-isoprene rubber is excellent in wear resistance, elasticity, and water resistance, and is used in various applications such as molding materials and resin modifiers.

One example of main applications of the conjugated diene rubber is a tire for automobiles. Examples of characteristics required in such a tire include mechanical strength, wear resistance, and wet-grip performance (hereinafter, also collectively referred to as "strength and the like"). Furthermore, a tire (so-called "eco-tire") excellent in energy saving performance, namely, fuel efficiency has been recently actively developed. The eco-tire is required to not only have strength and the like, but also be in low in rolling resistance.

While it is known for retaining strength and the like of the tire to add a filler (filling agent for reinforcing) such as carbon black or silica to conjugated diene rubber, terminal-modified solution polymerization type SBR (terminal-modified S-SBR) attracts attention, which is a material not only further enhancing strength and the like of the tire, but also imparting excellent rolling resistance. The terminal-modified S-SBR has a functional group at a molecular terminal of SBR, and the functional group at the molecular terminal interacts with the filler. Such interaction leads to not only an enhancement in dispersibility of the filler in SBR, but also a reduction in motility due to restriction of the molecular terminal of SBR. As a result, the tire is reduced in hysteresis loss (internal friction) and lowered in rolling resistance. Such characteristics are utilized to develop an eco-tire simultaneously having strength and the like, and low rolling resistance.

In order to improve affinity between a polymer used as raw material rubber and a filler in such a rubber composition, there are made various studies about, for example, a method for modification by introduction of a predetermined functional group into a butadiene-based polymer as raw material rubber.

For example, in Patent Literature 1, S-SBR simultaneously having high-temperature characteristics and rubber-like properties is obtained by synthesizing a block copolymer including an $\alpha$-methylstyrene block and a butadiene block by living anionic polymerization by use of an organolithium compound as an initiator in a non-polar solvent, and furthermore, if necessary, reacting the block copolymer with a polyfunctional coupling agent.

Patent Literature 2 discloses a star-block interpolymer including a random copolymer block of conjugated diene and a monovinylaromatic monomer, a poly-conjugated diene block, and a functional group derived from a polyfunctional lithium-based initiator, and the interpolymer is here disclosed to be widely usable in rubber in production of a tire tread having excellent characteristics including reduced rolling resistance and improved traction characteristics.

It is considered that the techniques in Patent Literatures 1 and 2 each have the effect of retaining processability of rubber due to introduction of a branched structure into a rubber component. However, there is not any special devisal about interaction with the filler for retention of strength, and contribution to strength is not sufficient.

Patent Literature 3 discloses a rubber composition obtained by compounding a low-molecular weight functional group-containing polymer having a functional group interacting with carbon black, at a molecular chain terminal, and having a polymer structure similar to that of a rubber component of diene-based rubber, to a rubber composition obtained by compounding a predetermined amount of carbon black to blended rubber including a plurality kinds of diene-based rubber. The rubber composition can have controlled amount of carbon black dispensed in each diene-based rubber

component by compounding a low-molecular weight compound interacting with carbon black, to rubber. Thus, features of such each rubber component can be effectively exhibited to allow rubber characteristics, for example, rolling characteristics and wet characteristics which are contradicted each other, to be simultaneously satisfied. However, the technique does not impart sufficient contribution to strength because the low-molecular weight compound is compounded to rubber.

Patent Literature 4 discloses a rubber composition containing a crosslinked rubber particle including a conjugated diene unit, an aromatic vinyl unit and a unit having at least two polymerizable unsaturated groups, and conjugated diene/aromatic vinyl copolymerized rubber including a conjugated diene unit having a specified bond structure, and the crosslinked rubber particle is here disclosed to optionally include a monomer unit having a carboxylic acid group, an amino group, a hydroxyl group, an epoxy group and an alkoxysilyl group. Patent Literature 4 discloses a technique relating to a crosslinked rubber particle three-dimensionally crosslinked, including a conjugated diene unit, an aromatic vinyl unit and a unit having at least two polymerizable unsaturated groups, in which a polymerizable unsaturated monomer containing at least one functional group of a carboxylic acid group, an amino group, a hydroxyl group, an epoxy group and an alkoxysilyl group and being copolymerizable with a monomer of the crosslinked rubber particle is used for introduction into the crosslinked rubber particle, and then proper interaction with an inorganic filling agent (filler) such as silica is achieved and thus dispersibility and processability of the inorganic filling agent are excellent. However, such at least one functional group of a carboxylic acid group, an amino group, a hydroxyl group, an epoxy group and an alkoxysilyl group introduced into the crosslinked rubber particle three-dimensionally crosslinked, according to the technique disclosed in the Patent Literature, may penetrate into an insoluble network structure of the crosslinked rubber particle not to contribute to dispersibility of the inorganic filling agent outside the crosslinked rubber particle in some cases, and no sufficient effect by functional group introduction is obtained.

Patent Literature 5 discloses conjugated diene-based rubber including an interpenetrating network structure type polymer constituted from a crosslinked polymer having a structural unit derived from an ethylenically unsaturated compound whose homopolymer has a glass transition temperature of 10°C or more, and a structural unit derived from a crosslinkable compound, and a non-crosslinked polymer having a structural unit derived from a conjugated diene compound. Examples of the Patent Literature disclose conjugated diene-based rubber obtained by performing formation of a crosslinked polymer including styrene and divinylbenzene by polymerization, deactivation of some of active species and then furthermore polymerization with addition of butadiene and n-butyllithium as a polymerization initiator, for completion of polymerization, and thereafter addition of a modifying agent such as N,N-bis(triethylsilyl)aminopropylmethyldimethoxysilane, for modification. However, the Patent Literature merely discloses optional modification of a molecular terminal of the non-crosslinked polymer by a modifying agent including a functional group-containing silane compound having an amino group, a phosphino group or a thiol group, and does not indicate any modification of a crosslinked polymer itself including styrene and divinylbenzene, by a modifying agent. The crosslinked polymer including styrene and divinylbenzene, disclosed in the Patent Literature, is a solvent-insoluble polymer three-dimensionally crosslinked, and therefore has structurally brittle microgel and thus is not sufficient in the effect of improving mechanical strength, even if formed into an interpenetrating network structure type polymer with a non-crosslinked polymer having a structural unit derived from a conjugated diene compound.

Patent Literature 6 discloses a crosslinked polymer particle having polysiloxane on a particle surface and having an average particle size of 0.01 to 10 μm. In Examples of the Patent Literature, after a polymer particle is obtained by suspension polymerization of divinylbenzene and styrene in the presence of a radical polymerization initiator, methyltriethoxysilane is allowed to react at a pH of 8.0 and a polysiloxane-modified crosslinked polymer particle is recovered. Furthermore, the polysiloxane-modified crosslinked polymer particle obtained is disclosed to be able to be blended with a polypropylene resin to allow for the improvement of blocking resistance of a film. Furthermore, the polysiloxane-modified crosslinked polymer particle of the Patent Literature is disclosed to be useful as a resin modifier, a toner fluidity improver, an antiblocking agent of a resin film, a lubricant of a film, a spacer, a standard particle, an antigen-antibody reaction test particle, a traveling performance stabilizer of thermosensitive paper, an additive for cosmetics, a rheology control agent, or a shrinkage reducing agent. However, the polysiloxane-modified crosslinked polymer particle disclosed in the Patent Literature is a solvent-insoluble crosslinked polymer particle and is a crosslinked polymer particle having the property of being hard and brittle, and thus cannot be improved in strength when used for modification of a conjugated diene-based copolymer synthesized by anionic polymerization.

Patent Literature 7 discloses a modified polymer molecule which is obtained by reacting a divinylidene polymerization initiator and a monomer to form an "ω,ω-carbanion" living polymer molecule of the present invention, and reacting at least one living polymer molecule and at least one equivalent of a chain terminal moiety-modifying agent. The Patent Literature also discloses a branched modified polymer molecule which is formed by reacting a coupling agent such as tin tetrachloride and a carbanion polymer at its chain terminal position. The Patent Literature also discloses the branched modified polymer molecule which can be formed by addition of a monomer reactive with two or more polymer chains grown, such as divinylbenzene, into a polymerization mixture at any time during polymerization. However, a problem is that, if divinylbenzene is added as a coupling agent at post-addition, according to the technique of the Patent Literature, microgel is generated and no sufficient effect of strength improvement is obtained. The Patent Literature does

not indicate that a low-molecular weight solvent-soluble modified vinylaromatic copolymer having a functional group and a branched structure can be used as a coupling agent of a conjugated diene-based polymer.

Patent Literature 8 discloses a crosslinked polymer containing a silylated ferrocene diphosphine ligand, obtained by swelling a polymer obtained by crosslinking of aminomethylated polystyrene with 1% divinylbenzene, with methylene chloride, and then allowing tolylene 2,4-diisocyanate (TDI) to react. However, the crosslinked polymer disclosed in the Patent Literature is indicated to have no solvent solubility, with reference to the description where the crosslinked polymer disclosed in the Patent Literature is swollen with methylene chloride, and a solvent-soluble branched polymer cannot be conceived. The crosslinked polymer disclosed in the Patent Literature, while is useful as a catalyst for enantioselective hydrogenation, is not indicated to have the capability to improve characteristics of a conjugated diene-based polymer.

Patent Literature 9 discloses a resin composition modified by blending and kneading an antioxidant, a silane coupling agent, and a radical initiator with a copolymer (cross copolymer) having an ethylene-styrene-divinylbenzene copolymer chain and a polystyrene chain, obtained by anionic polymerization performed in the co-existence of an ethylene-styrene-divinylbenzene copolymer obtained by coordination polymerization, and a styrene monomer. However, the cross copolymer used in Examples of the Patent Literature contains divinylbenzene at a content significantly below 0.5% by mol, and furthermore the Patent Literature does not teach whether or not a terminal of the cross copolymer is modified by the silane coupling agent post-added and does not indicate the capability to improve characteristics of a conjugated diene-based polymer by coupling with a conjugated diene-based living polymer.

The present applicant has found in view of the above problems that copolymer rubber simultaneously having processability, strength and homogeneity can be provided by adopting a specified polyfunctional vinylaromatic copolymer simultaneously having respective interaction functions with a branched structure and a filler, as a constituent unit of conjugated diene rubber (Patent Literature 10).

Furthermore, Patent Literatures 11 to 14 each propose a polyfunctional vinylaromatic copolymer essentially containing an indane structural unit, a cycloolefin compound-derived structural unit, and/or a styrene-derived structural unit.

The present invention contributes to modification of a resin by a procedure different from the procedures disclosed in Patent Literatures 10 to 14, and proposes a material which is useful particularly for a rubber composition for tires or the like and which can contribute to enhancements in characteristics such as strength and wear resistance.

## Citation List

### Patent Literature

Patent Literature 1: JP2003-73434A
Patent Literature 2: JP2004-517202 A
Patent Literature 3: JP 2005-213381 A
Patent Literature 4: WO 2002/000779 A
Patent Literature 5: JP 2013/155268 A
Patent Literature 6: JP 7-207029 A
Patent Literature 7: JP 2016-530361 A
Patent Literature 8: JP 8/259584 A
Patent Literature 9: JP 2012-92197 A
Patent Literature 10: WO 2018/084128 A
Patent Literature 11: JP 2004-123873 A
Patent Literature 12: JP 2018-39995 A
Patent Literature 13: WO 2018/181842 A
Patent Literature 14: WO 2020/67336 A


## Summary of Invention

An object of the present invention is to solve the above problems to thereby provide a modified vinylaromatic copolymer which causes no generation of a small amount of microgel, which can be used in production of a modified conjugated diene-based copolymer having a branched structure, and which has reactivity and solubility, a resin composition simultaneously having processability, strength and homogeneity and having a branched structure, a crosslinked resin product obtained by crosslinking of the composition, and a structural member.

The present inventors have made intensive studies, and as a result, have found that the above problems can be solved by a branched vinylaromatic copolymer containing a specified structural unit (a) derived from a divinylaromatic

compound, a specified structural unit (b) derived from a monovinylaromatic compound, and a specified structural unit (c) derived from a conjugated diene-based compound, in which an active terminal is modified by an amino group, an alkoxysilyl group or a hydroxyl group, leading to completion of the present invention.

The present invention relates to a modified vinylaromatic copolymer containing a structural unit (a) derived from a divinylaromatic compound, a structural unit (b) derived from a monovinylaromatic compound, and a structural unit (c) derived from a conjugated diene-based compound, wherein

95% by mol or more of the structural unit (a) is a crosslinked structural unit (a1) represented by the following formula (1):

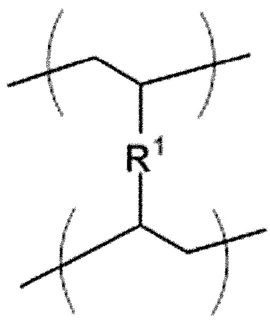

(1)

wherein R1 represents an aromatic hydrocarbon group having 6 to 30 carbon atoms; and

the copolymer is modified by at least one functional group selected from the group consisting of an amino group, an alkoxysilyl group, and a hydroxyl group, the average number of functional groups per molecule is 2.0 or more, and 30% by mol or more of the functional group is bound to the structural unit (c) derived from a conjugated diene compound to provide modification, and a number average molecular weight Mn is 500 to 30,000.

The modified vinylaromatic copolymer may contain 0.5% by mol or more and 45.0% by mol or less of the structural unit (a) derived from a divinylaromatic compound, contain 0.5% by mol or more and 99.0% by mol or less of the structural unit (b) derived from a monovinylaromatic compound, and contain 0.5% by mol or more and 99.0% by mol or less of the structural unit (c) derived from a conjugated diene compound, in which a molecular weight distribution (Mw/Mn) represented by a ratio of a weight average molecular weight Mw to the number average molecular weight Mn may be 10.0 or less. The average number of functional groups per molecule can be in a range from 2 to 20.

Examples of the monovinylaromatic compound include styrene, vinylnaphthalene, vinylbiphenyl, m-methylstyrene, p-methylstyrene, o,p-dimethylstyrene, m-ethylvinylbenzene, indene or p-ethylvinylbenzene.

The present invention is a method for producing the modified vinylaromatic copolymer, including a polymerization step of copolymerizing the divinylaromatic compound with the monovinylaromatic compound, or the divinylaromatic compound and the monovinylaromatic compound with a monomer anionically copolymerizable with these compounds, by use of an alkali metal compound or an alkaline earth metal compound as an anionic polymerization initiator, to obtain a vinylaromatic copolymer having a branched structure and an active terminal, and a terminal modification step of forming a functional group to react a compound having at least one functional group selected from the group consisting of an amino group, an alkoxysilyl group, and a hydroxyl group, or a precursor compound thereof with the active terminal of the vinylaromatic copolymer.

Furthermore, the present invention also relates to a modified conjugated diene-based copolymer obtained by reacting the modified vinylaromatic copolymer with a polymer of a conjugated diene compound, or a copolymer of a conjugated diene compound and an aromatic vinyl compound.

The modified conjugated diene-based copolymer can contain 0.001 to 6% by weight of a structural unit (A1) derived from a modified vinylaromatic copolymer, 29 to 99.999% by weight of a structural unit (B1) derived from a conjugated diene compound, and 0 to 70% by weight of a structural unit (C1) derived from an aromatic vinyl compound. An area of a region corresponding to a number average molecular weight (Mn) three times or more (3Mp or more) of the number average molecular weight (Mn) at a peak at the lowest molecular weight side may be 10% or more based on a total area of 100% in a differential molecular weight distribution curve obtained by gel permeation chromatography (GPC) measurement.

The present invention also relates to a resin composition containing 0.5 to 200 parts by weight of at least one reinforcing filling agent selected from the group consisting of a silica-based inorganic filling agent, metal oxide, metal hydroxide and carbon black based on 100 parts by weight of the modified conjugated diene-based copolymer.

The resin composition can further contain a crosslinking agent. The present invention also relates to a crosslinked

resin product obtained by crosslinking such a resin composition further containing a crosslinking agent.

The present invention also relates to a structural member including the crosslinked resin product.

The modified vinylaromatic copolymer of the present invention can be used as a raw material of a modified conjugated diene-based copolymer. Furthermore, a crosslinked resin composition obtained by incorporating a filler into the modified conjugated diene-based copolymer followed by crosslinking has excellent filler dispersibility and excellent mechanical strength and wear resistance, and is thus useful in an elastomer material for tires (in particular, tire treads), antiseismic rubber, rubber hoses, rubber rollers, footwear materials, and the like. The composition can be applied to a molding material, a resin modifier, and the like. The composition can be provided as a dielectric material for low dielectric substrates, an insulating material, a heat-resistant material, a structural material, an adhesive, a sealant, paint, a coating agent, a sealing material, a print ink, a dispersant, or the like in the fields of electrical and electronic industries, spacecraft and aircraft industries, architecture and construction industries, and the like.

A film and a sheet each coated with a curable resin composition containing the modified vinylaromatic copolymer of the present invention not only can be suitably used in a plastic optical component, a touch panel, a flat display, a film liquid crystal device, and the like. The modified vinylaromatic copolymer of the present invention can also be used as a modifier for modification of characteristics such as heat resistance, dielectric characteristics, bonding/adhesion, and optical characteristics of a thermoplastic resin or a curable resin composition for use as a main material for films, sheets, and prepregs. A curable resin composition containing the polyfunctional vinylaromatic copolymer of the present invention, as a main material, can also be processed into a film, a sheet, and a prepreg, and then used. Furthermore, a curable resin composition containing the modified vinylaromatic copolymer of the present invention can also be used in any of various optical devices including an optical waveguide and an optical lens.

Brief Description of Drawing

[Figure 1] Figure 1 shows a GPC chart representing a peak top molecular weight (Mp), a molecular weight two times (2Mp) of Mp, and a molecular weight three times (3Mp) of Mp.

Description of Embodiments

The modified vinylaromatic copolymer (hereinafter, also referred to as "modified copolymer" or "copolymer".) of the present invention is a copolymer containing a structural unit (a) derived from a divinylaromatic compound, a structural unit (b) derived from a monovinylaromatic compound, and a structural unit (c) derived from a conjugated diene-based compound, wherein 95% by mol or more of the structural unit (a) is the crosslinked structural unit (a1) represented by the formula (1).

The structural unit (a) derived from a divinylaromatic compound, contained in the modified vinylaromatic copolymer of the present invention, plays a significant role as a crosslinking component that causes the copolymer to branch and makes it polyfunctional. When polymers of the conjugated diene compound are modified using the polyfunctional modified vinylaromatic copolymer, a multi-branched component of high molecular weight is generated, allowing enhancement in wear resistance.

Examples of the divinylaromatic compounds to be used preferably include divinylbenzene (including each isomer), divinylnaphthalene (including each isomer), and divinylbiphenyl (including each isomer), but are not limited thereto. These may be used alone or two or more kinds thereof may be used in combination. The divinylaromatic compound is more preferably divinylbenzene (m-isomer, p-isomer, or an isomer mixture thereof) from the viewpoint of fabricability.

On the contrary, the structural unit (b) derived from a monovinylaromatic compound, contained in the modified vinylaromatic copolymer of the present invention, improves solvent solubility, compatibility, and processability of the copolymer. Examples of the monovinylaromatic compounds include vinylaromatic compounds such as styrene, vinylnaphthalene, vinylbiphenyl, and $\alpha$-methylstyrene; nuclear alkyl-substituted vinylaromatic compounds such as o-methylstyrene, m-methylstyrene, p-methylstyrene, o,p-dimethylstyrene, o-ethylvinylbenzene, m-ethylvinylbenzene, and p-ethylvinylbenzene; and cyclic vinylaromatic compounds such as indene, acenaphthylene, benzothiophene, and coumarone, but are not limited thereto. To prevent gelation of the copolymer and to improve solubility in the solvent, compatibility, and processability, styrene, ethylvinylbenzene (including each isomer), ethylvinylbiphenyl (including each isomer), ethylvinylnaphthalene (including each isomer), and indene are particularly preferably used from the viewpoint of cost and ease of availability. The monovinylaromatic compound is more preferably styrene, ethylvinylbenzene (m-isomer, p-isomer, or an isomer mixture thereof), or indene from the viewpoint of compatibility and cost.

The structural unit (c) derived from a conjugated diene compound, contained in the modified vinylaromatic copolymer of the present invention, has a function of not only 1) increasing the introduction efficiency of a modification group to be introduced into the modified vinylaromatic copolymer, but also 2) increasing reactivity of a terminal modification group of the modified vinylaromatic copolymer in a reaction of the modified vinylaromatic copolymer with a polymer of

a conjugated diene compound having an active terminal or a copolymer of a conjugated diene compound having an active terminal and an aromatic vinyl compound.

The conjugated diene compound is preferably a conjugated diene compound having 4 to 12 carbon atoms per molecule, more preferably a conjugated diene compound having 4 to 8 carbon atoms per molecule. Examples of such a conjugated diene compound include, but are not limited to the following, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene and isoprene are preferable from the viewpoint of ease of a copolymerization reaction with the aromatic vinyl compound, and ease of industrial availability. These may be used singly or in combinations of two or more.

The modified vinylaromatic copolymer of the present invention is modified by a polymerization initiator or modifying agent having at least one functional group selected from the group consisting of an amino group (-NR), an alkoxysilyl group (Si-OR) and a hydroxyl group (-OH), and the amount of introduction of the modifying agent is 2.0 or more in terms of the average number of functional groups per molecule. A value of 2.0 or more, obtained by dividing the number average molecular weight of the copolymer by the equivalent of functional group, can be determined to mean formation of two or more functional groups. The amount of introduction of the polymerization initiator or modifying agent having functional group(s) is preferably 2.0 to 20, more preferably 2.0 to 5.0 in terms of the average number of functional groups per molecule, and is further preferably 2.0 to 4.0 at a terminal.

In the modified vinylaromatic copolymer of the present invention, preferably 30% by mol or more, more preferably 60% by mol or more of a modifying agent having functional group(s) to be introduced as a stopping terminal, by a reaction with a living terminal at the stopping of polymerization, is bound to the structural unit (c) derived from a conjugated diene compound to provide modification. For example, in a case where a diene monomer is added later by sequential monomer addition in anionic living polymerization, conversion of an active terminal into a diene monomer unit can be confirmed by shifting of the molecular weight distribution toward the higher molecular weight side. Further preferably 80% by mol or more, optimally 90% by mol or more of the modifying agent having functional group(s) is bound to the structural unit (c) derived from a conjugated diene compound to provide modification.

The modified copolymer of the present invention can be produced in the production method of the present invention.

The production method of the present invention includes a polymerization step of copolymerizing the divinylaromatic compound with the monovinylaromatic compound, or the divinylaromatic compound and the monovinylaromatic compound with a monomer anionically copolymerizable with these compounds, by use of an alkali metal compound or an alkaline earth metal compound as an anionic polymerization initiator, to obtain a vinylaromatic copolymer (M) having a branched structure and an active terminal, and a terminal modification step of forming the functional group at the active terminal of the vinylaromatic copolymer (M).

The modified vinylaromatic copolymer of the present invention is a copolymer containing the structural unit (a) derived from a divinylaromatic compound, the structural unit (b) derived from a monovinylaromatic compound, and the structural unit (c) derived from a conjugated diene-based compound, and other monomers needed to have anionic polymerizability, such as a trivinylaromatic compound, can be used and a structural unit (e) derived from such other monomers can be introduced into the copolymer to the extent that the effects of the structural units (a) to (c) are not impaired.

Specific examples of the other monomers preferably include 1,3,5-trivinylbenzene and 1,3,5-trivinylnaphthalene, but are not limited thereto. These can be used alone, or two or more kinds thereof may be used in combination. The other monomers may be used within a range of less than 30% by mol of all monomers. Therefore, the amount of the structural unit (e) derived from other monomers is within a range of less than 30% by mol based on the total amount of the structural units in the copolymer.

In a case where a vinylaromatic copolymer containing the structural unit (a) derived from a divinylaromatic compound and the structural unit (b) derived from a monovinylaromatic compound is synthesized as a precursor, by a cationic polymerization method, and then this precursor prepolymer and a polymer initiator derived from a polymerization initiator containing an alkali metal compound or an alkaline earth metal compound are used to synthesize the modified vinylaromatic copolymer of the present invention, specific examples of the monomers introduced as other monomers, into the precursor prepolymer, include isobutylene, diisobutylene, cyclobutene, cyclopentene, cyclooctene, norbornene, dicyclopentadiene, 2-methyl-1-butene, 2-methyl-1-pentene, 1-methyl-1-cyclopentene, 2-methyl-1-hexene, 1-methyl-1-cyclohexene, 2-methyl-1-heptene, 2-methyl-1-octene, 2-methyl-1-nonene, 2-methyl-1-decene, 2-methyl-1-dodecene, 2-methyl-1-tetradecene, 2-methyl-1-hexadecene, 2-methyl-1-octadecene, 2-methyl-1-eicosene, 2-methyl-1-docosene, and 2-methyl-1-tetracosene, but are not limited thereto. These can be used alone, or two or more kinds thereof may be used in combination. The other monomers may be used within a range of less than 30% by mol of all monomers. Therefore, the amount of the structural unit (e) derived from other monomers is within a range of less than 30% by mol based on the total amount of the structural units in the copolymer.

In a method for producing the non-modified polyfunctional vinylaromatic copolymer, monomers including a divinylaromatic compound and a monovinylaromatic compound, or further including other monomers if necessary, are

polymerized in the presence of a polymerization initiator composed of an alkali metal compound or an alkaline earth metal compound, thereby producing a copolymer.

The structural unit (a) at least partially includes the crosslinked structural unit (a1) represented by the formula (1), but a molar fraction (also referred to as "degree of crosslinking") indicating the proportion of the crosslinked structural unit (a1) derived from the divinylaromatic compound to the structural unit (a) is 0.95 or more.

The degree of crosslinking of the crosslinked structural unit (a1) is in a range of 0.95 or more, and a preferable lower limit is 0.98 or more and more preferably 0.99 or more.

The degree of crosslinking is a parameter that can be controlled and changed as desired. However, when the degree of crosslinking is less than 0.95, many highly reactive pendant vinyl groups remain in the modified copolymer of the present invention to result in a tendency to easily cause a crosslinking reaction to occur in a molecule having the pendant vinyl group remaining in the copolymer as a starting point, leading to a tendency to generate a microgel in compounding and vulcanization due to the thermal history or the like in the subsequent steps, in a case where this polymer is used to modify a conjugated diene-based (co)polymer.

The method for producing the modified copolymer of the present invention includes the polymerization step and the terminal modification step as described above.

A polymerization initiator composed of an alkali metal compound or an alkaline earth metal compound used in the polymerization process is described.

The alkali metal compound used as a polymerization initiator is not particularly limited, and for example, an organolithium compound is preferable. The organolithium compound may be either a low molecular weight organolithium compound or a solubilized oligomeric organolithium compound. Examples thereof include compounds having a carbon-lithium bond, compounds having a nitrogen-lithium bond, and compounds having a tin-lithium bond in the bonding mode of organic groups and lithium. The use of the organolithium compound provides good initiation efficiency and a good living rate of the polymer. Examples of the organolithium compounds include, but are not particularly limited to, organomonolithium compounds, organodilithium compounds, and organopolylithium compounds. A hydrocarbon containing the functional groups is suitable as an organic group, which has the advantage of excellent solubility in an organic solvent and further has an excellent initiation rate. A modification group containing a functional group can also be imparted to the starting terminal by the use of the compounds having a nitrogen-lithium bond and the compounds having a tin-lithium bond.

Examples of other organoalkali metal compounds of the organolithium compounds include, but are not particularly limited to, organosodium compounds, organopotassium compounds, organorubidium compounds, and organocesium compounds. More specific examples thereof include sodium naphthalene and potassium naphthalene. Other examples thereof include alkoxides such as lithium, sodium and potassium, sulfonates, carbonates, and amides. Such organoalkali metal compounds may also be used in combination with other organometallic compounds.

Examples of the alkaline earth metal compound used as a polymerization initiator include organomagnesium compounds, organocalcium compounds, and organostrontium compounds. Compounds of alkaline earth metals such as alkoxides, sulfonates, carbonates, and amides may also be used. These organoalkaline earth metal compounds may be used in combination with the alkali metal compounds or the other organometallic compounds.

In the present invention, a polymerization initiator having at least one functional group selected from the group consisting of an amino group (-NR), an alkoxysilyl group (-Si-OR) and a hydroxyl group (-OH) can be used to modify a terminal and a structural unit.

The amino group (-NR) includes a primary amino group (-NH2), a secondary amino group (-NHR1) or a tertiary amino group (-NR1R2). The alkoxysilyl group (-Si-OR) is obtained by binding 1 to 3 alkoxy groups to silicon. Examples of the alkoxy group(s) bound to the alkoxysilyl group include a methoxy group, an ethoxy group, a propoxy group, a butoxy group, a pentoxy group, and a hexoxy group. Among these, a methoxy group and an ethoxy group are preferable from the viewpoint of shortening the reaction time with a polymer having an active terminal. Accordingly, the alkoxysilyl group is preferably a methoxysilyl group (-Si-OCH3) or an ethoxysilyl group (-Si-OC2H5).

Examples of alkali metal compounds having a functional group that can be used as a polymerization initiator include, but are not particularly limited to, lithiumamide compounds to be obtained by lithiation of hydrogen in a secondary amine and alkyllithium to which the functional group is bonded. The functional group can be imparted to the polymerization initiation terminal of the conjugated diene-based copolymer by these compounds. The functional group is not particularly limited, but preferably a functional group that is inert to alkali metals, such as a disubstituted amino group (i.e., tertiary amine), a protected monosubstituted amino group (hereinafter, also referred to as "protected monosubstituted amino group".), or a protected amino group (hereinafter, also referred to as "protected disubstituted amino group".). Examples of the protected monosubstituted amino group or the protected amino group include those in which one hydrogen of the monosubstituted amino group or two hydrogens of the amino group are each substituted with a trialkylsilyl group.

Examples of the organolithium compounds used as polymerization initiators include, but are not particularly limited to, mono-organolithium compounds such as n-butyllithium, sec-butyllithium, tert-butyllithium, n-propyllithium, isopropyllithium, and benzyllithium; and polyfunctional organolithium compounds such as 1,4-dilithiobutane, 1,5-dilithiopentane, 1,6-dilithiohexane, 1,10-dilithiodecane, 1,1-dilithiodiphenylene, dilithiopolybutadiene, dilithiopolyisoprene, 1,4-dilithiobenzene, 1,2-dilithio-1,2-diphenylethane, 1,4-dilithio-2-ethylcyclohexane, 1,3,5-trilithiobenzene, and 1,3,5-trilithio-2,4,6-triethylbenzene. Among these, mono-organolithium compounds such as n-butyllithium, sec-butyllithium, and tert-butyllithium are preferable.

Specific examples of polymerization initiators having a functional group include, but are not particularly limited to, the compounds shown below. The types of functional groups that can be imparted to the polymer are described in parentheses.

Examples thereof include dipropylaminolithium, diisopropylaminolithium, dibutylaminolithium, tetramethyleniminolithium, pentamethyleniminolithium, hexamethyleniminolithium, heptamethyleniminolithium, 2-dimethylaminoethyllithium, 3-dimethylaminopropyllithium, 3-diethylaminopropyllithium, and 4-dimethylaminobutyllithium (these are disubstituted amino groups); 2-trimethylsilylethylaminoethyllithium and 3-trimethylsilylmethylaminopropyllithium (these are monosubstituted amino groups); and 2-bistrimethylsilylaminoethyllithium and 3-bistrimethylsilylaminopropyllithium (these are amino groups).

As the polymerization initiator, oligomeric initiators in which various lithium-based initiators react with monomers can be used. At this point, for the monomer, a monomer having at least one functional group selected from the group consisting of amino groups, alkoxysilyl groups, and hydroxyl groups can be used. The oligomeric initiators are not particularly limited, and are preferably those with a molecular weight of 1,000 or less for easy industrial handling. The polymerization or copolymerization is performed using the polymerization initiator having the functional group, and in the next step, it is possible to introduce a compound having at least one functional group selected from the group consisting of an amino group, an alkoxysilyl group, and a hydroxyl group or a compound forming at least one functional group selected from the group consisting of an amino group, an alkoxysilyl group, and a hydroxyl group to the active terminal of the vinylaromatic copolymer.

Specific examples of the polyfunctional initiators include, but are not particularly limited to, organodilithium compounds and organopolylithium compounds. The organic groups are not particularly limited, and hydrocarbons are suitable. This has the advantage of excellent solubility in an organic solvent and further has an excellent initiation rate.

Specific examples of methods for preparing polyfunctional initiators include, but are not particularly limited to, methods involving the reaction of metallic lithium dispersion with a polyhalogenated hydrocarbon compound.

In the polymerization step, polar compounds may be added. The addition of the polar compounds is involved in an initiation reaction and a growth reaction, and is also effective in controlling the molecular weight and molecular weight distribution, promoting the polymerization reaction, or the like.

Examples of the polar compounds include ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium-tert-amylate, potassium-tert-butylate, sodium-tert-butylate, and sodium amylate; and phosphine compounds such as triphenylphosphine. These polar compounds may be used alone, or two or more kinds thereof may be in combination.

The amount of the polar compound used is not particularly limited, and can be selected depending on the purpose and the like. Generally, the amount used is preferably 0.01 to 100 mol based on 1 mol of the polymerization initiator or the polyfunctional initiator. Such a polar compound can be used as a regulator for an initiation reaction and a growth reaction of the modified vinylaromatic copolymer (A) in an appropriate amount depending on the desired molecular weight and molecular weight distribution. Many polar compounds simultaneously have an effective randomization effect in the copolymerization of a divinylaromatic compound with a monovinylaromatic compound, and can be used to adjust the distribution of the aromatic vinyl compound and as an adjuster for the styrene block amount.

The copolymerization of the divinylaromatic compound with a monomer containing the monovinylaromatic compound is preferably performed by solution polymerization in an inert solvent. The polymerization solvent is not particularly limited, and for example, hydrocarbon solvents such as saturated hydrocarbon and aromatic hydrocarbon are used. Specific examples thereof include aliphatic hydrocarbons such as butane, pentane, hexane, and heptane; alicyclic hydrocarbons such as cyclopentane, cyclohexane, methylcyclopentane, methylcyclohexane, dimethylcyclohexane, ethylcyclohexane, and decalin; aromatic hydrocarbons such as benzene, toluene, and xylene; and hydrocarbon-based solvents composed of mixtures thereof.

The monomers and polymerization solvents are each preferably treated alone or a mixed solution thereof is preferably treated using an organometallic compound. Thereby, the divinylaromatic compound, the monomer such as monovinylaromatic compound, and allenes and acetylenes contained in the polymerization solvent can be treated. As a result, a polymer having an active terminal in high concentration can be obtained, allowing a high modification rate to be achieved.

The polymerization temperature in copolymerization is not particularly limited as long as it is a temperature at which a living anionic polymerization progresses, but is preferably 0°C or higher from the viewpoint of the productivity,

and preferably 120°C or lower from the viewpoint of sufficiently securing the reaction amount to the active terminal in the terminal modification step after the completion of the polymerization. The polymerization temperature is more preferably 50 to 100°C.

The mode of the polymerization reaction is not particularly limited, but the reaction can be performed in a polymerization mode such as a batch process (also referred to as a "batch type") or a continuous process. In the continuous process, one reactor or two or more series of reactors can be used. The reactor to be used is a tank type equipped with a stirrer, a tube type, or the like. In the batch process, the molecular weight distribution of the polymer to be obtained is generally narrow and tends to be 1.0 or more and less than 1.8 in terms of Mw/Mn. In the continuous process, the molecular weight distribution of the polymer to be obtained is generally wide and tends to be 1.8 or more and 3 or less in terms of Mw/Mn.

In the production method of the present invention, after obtaining a vinylaromatic copolymer having a branched structure and an active terminal in the polymerization step, this active terminal is subjected to a step of reacting a compound (containing a precursor thereof, also referred to as "modifying agent") having at least one functional group selected from the group consisting of an amino group, an alkoxysilyl group and a hydroxyl group. The modifying agent may also be a polymerization initiator for forming a functional group in the polymerization step. A functional group is introduced into the copolymer by such a polymerization initiator or modifying agent.

The reaction temperature, the reaction time, and the like in a reaction of the compound (including a precursor) having the functional group with the active terminal are not particularly limited, but the reaction is preferably performed at 0 to 120°C for 30 seconds or longer.

The amount of such polymerization initiator and modifying agent having functional group(s), here added, is not particularly limited, and the total number of moles of the modifying agent having functional group(s) is preferably in a range from 0.05 to 6 times to the number of equivalent of an active species derived from the polymerization initiator or polyfunctional initiator. A more preferable lower limit is 0.3, further preferably 0.5, and particularly preferably 0.7. On the contrary, a more preferable upper limit is 3 times, further preferably 2 times, and particularly preferably 1.5 times. The amount added is preferably 0.05 times or more from the viewpoint of obtaining a sufficient modification ratio in the target modified vinylaromatic copolymer.

In the terminal modification step, if the polymerization step is a batch process, the modification reaction may be performed continuously in the same reactor used in the polymerization step or may be performed by transferring the product to the next reactor. If the polymerization step is a continuous process, the reaction is performed by transferring the product to the next reactor. The terminal modification step is preferably performed immediately after the polymerization step, and the reaction is preferably performed by mixing the modifying agent within 5 minutes. The reactors for the modification reaction are preferably those in which stirring is sufficiently performed. Specifically, the reactors are static mixer type reactors, tank type reactors equipped with stirrers, or the like.

The terminal modification step is a step in which the vinylaromatic copolymer is modified by reacting the modifying agent having at least one functional group selected from an amino group, an alkoxysilyl group, and a hydroxyl group with particularly the structural unit (c) derived from a conjugated diene compound of the vinylaromatic copolymer. The modifying agent essentially has an amino group, an alkoxysilyl group or a hydroxyl group as a functional group, and may have any other functional group, for example, a halogen group, a ketone group, an ester group, an amide group, and/or an epoxy group as long as the effects of the present invention are not impaired.

Specific examples of the modifying agent having an amino group include, but are not particularly limited to, compounds having a functional group binding to an amino group and a polymeric active terminal in the molecule, preferably without active hydrogen. The amino group is not particularly limited, and specifically functional groups that are inert to alkali metals, such as a disubstituted amino group, i.e., a tertiary amine, a protected monosubstituted amino group, and an amino group with two hydrogens protected are preferable. Examples of the protected monosubstituted amino group or the amino group with two hydrogens protected include those in which one hydrogen of the monosubstituted amino group or two hydrogens of the amino group are each substituted with a trialkylsilyl group.

Specific examples of the modifying agent having an alkoxysilyl group include, but are not particularly limited to, compounds having a plurality of alkoxysilyl groups in the molecule (including compounds having a silyl group to which a plurality of alkoxy groups are bonded) and compounds having a functional group that binds to the alkoxysilyl group and the polymeric active terminal in the molecule. These are preferably compounds without active hydrogen.

Specific examples of the modifying agent forming a hydroxyl group include, but are not particularly limited to, compounds having a functional group that binds to the polymeric active terminal and in which a hydroxyl group is generated after the binding reaction, and compounds having a functional group that does not bind to the polymeric active terminal and in which a hydroxyl group is generated later by hydrolysis or other reactions, and the compounds without active hydrogen are preferable.

Examples of the compounds having a functional group in which a hydroxyl group is generated after the binding reaction include compounds having a ketone group, an ester group, an amide group, and an epoxy group. Examples of the compounds having a functional group in which a hydroxyl group is generated by hydrolysis or other reactions after

the binding reaction include compounds having an alkoxysilyl group, aminosilyl group.

Specific examples of the modifying agent are shown below. The compounds binding to the polymeric active terminal to form an amino group at the terminal of the polymer are not particularly limited, and examples thereof include C=N double bond compounds such as N,N'-dicyclohexylcarbodiimide.

The compounds binding to the polymeric active terminal to form an amino group and a hydroxyl group at the terminal of the polymer are not particularly limited, and examples thereof include ketone compounds having an amino group, such as N,N,N',N'-tetramethyl-4,4'-diaminobenzophenone (Michler's ketone), N,N,N',N'-tetraethyl-4,4'-diaminobenzophenone; cyclic urea compounds such as N,N'-dimethylimidazolidinone and N-methylpyrrolidone; cyclic amides, i.e., lactam compounds; amino group-containing epoxy compounds such as N,N,N',N'-tetraglycidyl-1,3-bisaminomethylcyclohexane; and epoxy compounds having a nitrogen-containing heterocyclic group as described in JP2001-131227A.

The compounds binding to the polymeric active terminal to form an alkoxysilyl group at the terminal of the polymer are not particularly limited, and examples thereof include halogenated alkoxysilane compounds such as trimethoxychlorosilane, triethoxychlorosilane, diphenoxydicrylorosilane; and polyfunctional alkoxysilane compounds such as bis(trimethoxysilyl)ethane and bis(3-triethoxysilylpropyl)ethane.

The compounds binding to the polymeric active terminal to form an alkoxysilyl group and a hydroxyl group at the terminal of the polymer are not particularly limited, and examples thereof include polysiloxane compounds having 3-glycidoxypropyltrimethoxysilane, 3-glycidoxypropyltriethoxysilane epoxy groups and alkoxysilyl groups in the molecule.

The compounds binding to the polymeric active terminal to form an amino group and an alkoxysilyl group at the terminal of the polymer are not particularly limited, and examples thereof include alkoxysilane compounds to which an alkyl group having an amino substituent is bonded, such as 3-dimethylaminopropyltrimethoxysilane, 3-dimethylaminopropyldimethoxymethylsilane, 3-dimethylaminopropyltriethoxysilane, bis(3-trimethoxysilylpropyl)methylamine, and bis(3-triethoxysilylpropyl)methylamine; alkoxysilane compounds to which a protected monosubstituted amino group as described in WO2007/034785 is bonded, such as N-[3-(triethoxysilyl)-propyl]-N,N'-diethyl-N'-trimethylsilyl-ethane-1,2-diamine and 3-(4-trimethylsilyl-1-piperazinyl)propyltriethoxysilane; alkoxysilane compounds to which a plurality of substituted amino groups as described in WO2008/013090 are bonded, such as N-[2-(trimethoxysilanyl)-ethyl]-N,N',N'-trimethylethane-1,2-diamine, 1-[3-(triethoxysilanyl)-propyl]-4-methylpiperazine, 2-(trimethoxysilanyl)-1,3-dimethylimidazolidine, and bis-(3-dimethylaminopropyl)-dimethoxysilane; alkoxysilane compounds to which a nitrogen-containing heterocyclic ring as described in WO2011/040312 is bonded, such as 1,4-bis[3-(trimethoxysilyl)propyl]piperazine and 1,4-bis[3-(triethoxysilyl)propyl]piperazine; and alkoxysilane compounds to which an azasilane group as described in WO2011/129425 is bonded, such as 3-[N,N-bis(trimethylsilyl)amino]propyltrimethoxysilane, 3-[N,N-bis(trimethylsilyl)amino]propylmethyldiethoxysilane, 2,2-dimethoxy-1-(3-trimethoxysilylpropyl)-1-aza-2-silacyclopentane, and 2,2-diethoxy-1-(3-triethoxysilylpropyl)-1-aza-2-silacyclopentane.

The compounds binding to the polymeric active terminal to form a hydroxyl group at the terminal of the polymer are not particularly limited, and examples thereof include epoxy compounds such as ethylene oxide and propylene oxide; and ketone compounds such as benzophenone.

The modified copolymer of the present invention or the modified vinylaromatic copolymer of the present invention to be obtained by the production method is modified by at least one reactive functional group selected from the group consisting of an amino group, an alkoxysilyl group and a hydroxyl group. Thus, may be molded and cured alone, but other polymerizable resins may be utilized for functional group modification and multi-branched component synthesis of high molecular weight. In particular, the modified vinylaromatic copolymer of the present invention is used for functional modification and multi-branched component synthesis of high molecular weight in the copolymerization of conjugated diene compounds alone and/or conjugated diene compounds with other monomers to obtain a conjugated diene-based copolymer (rubber).

The proportion of the multi-branched component in the modified vinylaromatic copolymer of the present invention is preferably 40% by area or more, more preferably 50 to 80% by area.

The modified copolymer of the present invention is an excellent modifier for a conjugated diene-based (co)polymer (rubber). Although the detail mechanism is not clear, it is presumed that a proper amount of such a functional group is introduced into the modified copolymer of the present invention, to thereby modify the rubber to become a modified conjugated diene-based copolymer (modified rubber), which allows this to be easily collected in the vicinity of a reinforcing filling agent, to result in an increase in reinforcing effect of the reinforcing filling agent, leading to an enhancement in wear resistance of a crosslinked product to be obtained.

It is also presumed that the modified rubber is mediated to result in an enhancement in affinity between the modified conjugated diene-based copolymer of the present invention and the reinforcing filling agent, and a dispersing state of each component in the resin composition, for example, the reinforcing filling agent, is ideal for enhancements in physical properties (for example, enhancement in wear resistance, enhancement in handling stability, dry-grip performance, and wet-grip performance) of a crosslinked product to be obtained.

It is presumed that, on the contrary, if the modified conjugated diene-based copolymer is so increased in the number of functional groups, the interaction between the copolymers adsorbed on the reinforcing filling agent causes

aggregation of the reinforcing filling agent and such copolymers do not contribute to an enhancement in affinity between the modified conjugated diene-based copolymer and the reinforcing filling agent.

The average number of functional groups per molecule of the modified vinylaromatic copolymer can be determined from the equivalent (g/eq) of functional group in the modified vinylaromatic copolymer (A) and the number average molecular weight Mn in terms of styrene, by the following numerical expression (1).

Average number of functional groups per molecule = [(Number average molecular weight Mn) / (Average molecular weight of divinylaromatic compound unit and monovinylaromatic compound) ] / (Equivalent of functional group) (1)

The equivalent of functional group in the modified vinylaromatic copolymer (A) means the mass of a divinylaromatic compound unit and a monovinylaromatic compound which are bound to one functional group. The equivalent of functional group can be calculated from the ratio of the area of a functional group-derived peak to the area of a polymer main chain-derived peak by use of $^{1}$H-NMR or $^{13}$C-NMR.

The addition amount of the modifying agent in the modified vinylaromatic copolymer (A) is preferably 1 to 200 parts by mass based on 100 parts by mass of the non-modified polyfunctional vinylaromatic copolymer. A more preferable upper limit is 100 parts by weight, further preferably 60 parts by weight, further preferably 50 parts by weight, and particularly preferably 40 parts by weight. In a case where the amount of the modifying agent added is more than 200 parts by mass, the dispersibility effect of the reinforcing filling agent (D) tends to be inferior, processability tends to be deteriorated, and wear resistance of a crosslinked product to be obtained tends to be also deteriorated. In a case where the amount used is less than 1 part by mass, the dispersibility effect of the reinforcing filling agent (D) tends to be inferior, and the dispersing state of the reinforcing filling agent (D) or the like tends not to be ideal for enhancements in physical properties of a crosslinked product to be obtained. The amount of the modifying agent having at least one functional group selected from an amino group, an alkoxysilyl group, and a hydroxyl group added to the modified vinylaromatic copolymer (A) can be determined using various analysis instruments for nuclear magnetic resonance spectroscopy and the like.

The modified vinylaromatic copolymer of the present invention contains 0.5 to 45.0% by mol of the structural unit (a) derived from a divinylaromatic compound. In a case where only the structural units (a), (b) and (c) are included in the structural unit, the molar fraction of the structural unit (a) is 0.005 to 0.45, i.e., 0.5 to 45% by mol, based on the sum of the structural units (a), (b) and (c). The molar fraction is calculated by the following numerical expression (2):

$$(a)/[(a)+(b)+(c)] \qquad (2)$$

wherein (a): the molar fraction of the structural unit (a) derived from a divinylaromatic compound, (b): the molar fraction of the structural unit (b) derived from a monovinylaromatic compound, and (c): the molar fraction of the structural unit (c) derived from a conjugated diene compound.

A preferable lower limit of the molar fraction of the structural unit (a) is 0.006, and more preferably 0.007. A preferable upper limit is 0.40, more preferably 0.35, and further preferably 0.01 to 0.30. In other words, the molar fraction is further preferably 1 to 30% by mol, optimally 0.03 to 0.15, and i.e., optimally 3 to 15% by mol.

In a case where any other structural unit than the structural units (a), (b) and (c) is included, a preferable lower limit of the content rate is 0.2% by mol, more preferably 0.4% by mol, and further preferably 0.6% by mol. A preferable upper limit is 35% by mol, more preferably 30% by mol, and further preferably 25% by mol.

The molar fraction of the structural unit (b) is calculated by the following numerical expression (3) in a case where only the structural units (a), (b) and (c) are included:

$$(b)/[(a)+(b)+(c)] \qquad (3)$$

wherein (a), (b) and (c) have the same meanings as in numerical expression (2).

The modified vinylaromatic copolymer of the present invention contains 0.5 to 99.0% by mol of the structural unit (b) derived from a monovinylaromatic compound. The molar fraction is 0.005 to 0.99. A preferable lower limit is 0.006. A more preferable lower limit is 0.007. A preferable upper limit is 0.90, and more preferably 0.85. The molar fraction is optimally 0.015 to 0.65. In other words, the molar fraction is further preferably 1 to 85% by mol, and optimally 1.5 to 65% by mol.

Even in a case where structural units other than structural units (a), (b) and (c) are included, a preferable molar fraction of the structural unit (b) is in the above range.

The molar fraction of the structural unit (c) is calculated by the following numerical expression (4) in a case where only the structural units (a), (b) and (c) are included:

$$(c)/[(a)+(b)+(c)] \qquad (4)$$

wherein (a), (b) and (c) have the same meanings as in numerical expression (2).

The modified vinylaromatic copolymer of the present invention contains 0.5 to 99.0% by mol of the structural unit (c) derived from a conjugated diene compound. The molar fraction is 0.005 to 0.99. A preferable lower limit is 0.05. A more preferable lower limit is 0.010. A more preferable lower limit is 0.10. A preferable upper limit is 0.90, more preferably 0.85, and further preferably 0.20 to 0.85. In other words, the molar fraction is further preferably 20 to 85% by mol, and optimally 20 to 80% by mol.

Even in a case where any other structural unit than the structural units (a), (b) and (c) is included, a preferable molar fraction of the structural unit (c) is in the above range.

The modified vinylaromatic copolymer of the present invention preferably contains 1 to 30% by mol of a structural unit derived from a compound having a functional group. The lower limit is more preferably 3% by mol and further preferably 5% by mol. The upper limit is more preferably 30% by mol and further preferably 20% by mol.

The modified vinylaromatic copolymer of the present invention can contain other structural units in addition to the above structural units. The detail of such other structural units is understood from the description of the production method.

The modified vinylaromatic copolymer of the present invention has an Mn (number average molecular weight in terms of standard polystyrene measured by use of gel permeation chromatography) of 500 to 30,000. A preferable lower limit is 600, more preferably 700, further preferably 800, and particularly preferably 900. On the contrary, a preferable upper limit is 25,000, more preferably 20,000, further preferably 15,000, and particularly preferably 10,000. If the Mn is less than 500, the amount of a functional group contained in the copolymer is reduced to result in a tendency to cause the reactivity of the conjugated diene-based copolymer with the active terminal to be deteriorated. If the Mn exceeds 30,000, not only gels are easily generated, but also the fabricability and tensile breaking elongation tend to be deteriorated. The molecular weight distribution is 30.0 or less, preferably 25.0 or less. A more preferable lower limit is 1.3, and further preferably 1.6. A more preferable upper limit is 20.0, further preferably 15.0, and particularly preferably 10.0. If the Mw/Mn exceeds 30.0, not only processing properties of the copolymerized rubber tend to get worse, but also gels tend to be generated.

The modified vinylaromatic copolymer of the present invention is soluble in a solvent selected from toluene, xylene, tetrahydrofuran, dichloroethane, or chloroform, and is advantageously soluble in all the solvents. It is necessary for the modified vinylaromatic copolymer of the present invention that not only 95% by mol or more of the structural unit (a) derived from divinylbenzene be the crosslinked structural unit (a1) represented by the formula (1) in order that the modified vinylaromatic copolymer is polyfunctional modified one, but also an active species and a vinyl group of divinylbenzene be in a specified range of ratio in order that the modified vinylaromatic copolymer is soluble in a solvent. The solubility in 100 g of the solvent is preferably 50 g or more, and more preferably 80 g or more.

The modified vinylaromatic copolymer of the present invention to be obtained has at least one reactive functional group selected from the group consisting of an amino group, an alkoxysilyl group, and a hydroxyl group and thus may be molded and cured alone, but other polymerizable resins may be utilized for functional group modification and multi-branched component synthesis of high molecular weight. In particular, the modified vinylaromatic copolymer of the present invention is used for functional group modification and multi-branched component synthesis of high molecular weight in the copolymerization of conjugated diene compounds alone and/or conjugated diene compounds with other monomers to obtain a conjugated diene-based copolymer (rubber).

A modified conjugated diene-based copolymer having a branched polymer-type modification group (A) based on the modified vinylaromatic copolymer of the present invention is obtained by copolymerizing the polyfunctional vinylaromatic copolymer (A) of the present invention with 1) the conjugated diene compound (B) or 2) the conjugated diene compound (B) and the aromatic vinyl compound (C) as raw materials. In a case where the aromatic vinyl compound (C) is not used, a modified diene-based rubber such as butadiene rubber or isoprene rubber can be obtained, and a modified conjugated diene-based copolymer such as the modified SBR can be obtained by use of the aromatic vinyl compound (C). These modified conjugated diene-based copolymers exhibit rubber properties, and thus are also referred to as a "modified copolymer rubber".

The polymerization steps for obtaining the modified conjugated diene-based copolymer of the present invention consist of a polymerization step of polymerizing the conjugated diene compound (B) or copolymerizing the conjugated diene compound (B) with the aromatic vinyl compound (C) by use of an alkali metal compound or an alkaline earth metal compound as a polymerization initiator, to obtain a conjugated diene-based copolymer having an active terminal, and a terminal modification step of introducing a branched polymer-type modification group (A) based on the modified

vinylaromatic copolymer.

Examples of the conjugated diene compound (B) include 1,3-butadiene, isoprene, 2,3-dimethyl-1,3-butadiene, 1,3-pentadiene, 3-methyl-1,3-pentadiene, 1,3-heptadiene, and 1,3-hexadiene. Among them, 1,3-butadiene and isoprene are preferable. These may be used alone, or two or more kinds thereof may be used in combination.

As the aromatic vinyl compound (C), styrene, α-methylstyrene, 1-vinylnaphthalene, 3-vinyltoluene, ethylvinylbenzene, vinylxylene, 4-cyclohexylstyrene, 2,4,6-trimethylstyrene, tert-butoxydimethylsilylstyrene, isopropoxydimethylsilylstyrene, and the like can be used alone, or two or more kinds thereof may be used in combination, but among these, styrene is particularly preferable.

In a case where 1,3-butadiene is used as the conjugated diene compound (B) and styrene is used as the aromatic vinyl compound, so-called styrene-butadiene rubber (SBR) is obtained. In a case where styrene is not used as the aromatic vinyl compound while 1,3-butadiene is used as the conjugated diene compound (B), so-called butadiene rubber (BR) is obtained. In a case where isoprene is used as the conjugated diene compound (B) and there is no structural unit of the aromatic vinyl compound (C), isoprene rubber (IR) is obtained. Above all, when a styrene-butadiene rubber (SBR) structure is provided, this is particularly preferable because of its excellent wear resistance, heat resistance, and aging resistance.

The polymerization step and the terminal modification step in the method for producing the modified conjugated diene-based copolymer of the present invention can be respectively performed in the same manner as the polymerization step and the terminal modification step with respect to the modified vinylaromatic copolymer. The polymerization initiator used in the polymerization step and the compound having a functional group used in the terminal modification step can also be respectively the same as the above polymerization initiator and the above compound having a functional group.

In this polymerization, the polymerization or copolymerization of the conjugated diene compound (B) is preferably performed by solution polymerization in an inert solvent. The polymerization solvent is not particularly limited, and for example, hydrocarbon solvents such as saturated hydrocarbon and aromatic hydrocarbon are used. Specific examples thereof include aliphatic hydrocarbons such as butane, pentane, hexane, and heptane; alicyclic hydrocarbons such as cyclopentane, cyclohexane, methylcyclopentane, methylcyclohexane, dimethylcyclohexane, ethylcyclohexane, and decalin; aromatic hydrocarbons such as benzene, toluene, and xylene; and hydrocarbon-based solvents composed of mixtures thereof.

The conjugated diene-based compound and the polymerization solvent are each preferably treated alone or a mixed solution thereof is preferably treated using an organometallic compound. Thereby, allenes and acetylenes contained in the conjugated diene compound and the polymerization solvent can be treated. As a result, a polymer having an active terminal in high concentration can be obtained, allowing a high modification rate to be achieved.

The polymerization temperature in copolymerization of the conjugated diene compound (B) or conjugated diene compound (B) with the aromatic vinyl compound (C) is not particularly limited as long as it is a temperature at which a living anionic polymerization progresses, but is preferably 0°C or higher from the viewpoint of the productivity, and preferably 120°C or lower from the viewpoint of sufficiently securing the reaction amount of the modified vinylaromatic copolymer having the structural unit (c) composed of a silane-based functional group represented by the formula (2) and/or the formula (3) of the present invention to the active terminal after the completion of the polymerization. The polymerization temperature is more preferably 50 to 100°C.

The polymerization mode in copolymerization of the conjugated diene compound (B) or conjugated diene compound (B) with the aromatic vinyl compound (C) is not particularly limited, and the reaction can be performed in a polymerization mode such as a batch process (also referred to as a "batch type") or a continuous process. In the continuous process, one reactor or two or more series of reactors can be used. The reactor to be used is a tank type equipped with a stirrer, a tube type, or the like. In the batch process, the molecular weight distribution of the polymer to be obtained is generally narrow and tends to be 1.0 or more and less than 1.8 in terms of Mw/Mn. In the continuous process, the molecular weight distribution of the polymer to be obtained is generally wide and tends to be 1.8 or more and 3 or less in terms of Mw/Mn.

In the method for producing the modified conjugated diene-based copolymer of the present invention, furthermore a main chain of the modified conjugated diene-based copolymer obtained after the polymerization step and the terminal modification step can also be modified in a main chain modification step.

The main-chain modification step is a step in which a vinyl group in the main chain of the modified conjugated diene-based polymer with the terminal modified is subjected to a hydrosilylation reaction with a silicon compound having at least one functional group selected from the group consisting of an amino group, an alkoxysilyl group, and a hydroxyl group, or a silicon compound forming at least one functional group selected from the group consisting of an amino group, an alkoxysilyl group, and a hydroxyl group, to modify the main chain. This step is carried out in the same manner in the case of using a polymerization initiator and in the case of using the polyfunctional initiator.

The hydrosilylation reaction can be performed in an organic solvent solution or as a polymer (without solvent) in a kneading machine. Specifically, a silicon compound such as a hydrosilane compound having the functional group can be reacted in the presence of a catalyst to modify the vinyl group of the main chain of the conjugated diene-based

copolymer. After the polymerization step in solution polymerization, it is preferable to use the polymeric solution with the polymeric terminal moiety further modified as described above, as it is.

Specific examples of a silicon compound for introduction of a silicon modification group having a functional group include, but are not particularly limited to, hydrosilane compounds. Such hydrosilane compounds are not particularly limited, and specifically may be any hydrosilane compounds having at least one functional group selected from the group consisting of an amino group, an alkoxysilyl group, and a hydroxyl group. Among them, a preferable hydrosilane compound includes a hydrosilane compound represented by the general formula HSiR''3-nXn, wherein R'' is not particularly limited, and represents a hydrocarbon group having 1 to 20 carbon atoms; X represents a hydrocarbon or an organosilane compound group having at least one functional group selected from the group consisting of an amino group, an alkoxy group, a hydroxyl group, or an amino group, an alkoxysilyl group, and a hydroxyl group; and n is 1 to 3. More preferably, n is 1, and R'' preferably represents a hydrocarbon having 1 to 3 carbon atoms. In a case where the hydrosilane compound has such a configuration, the yield of the hydrosilylation reaction is high.

The silicon compound for introduction of a silicon modification group having a functional group may also be a silicon compound forming at least one functional group selected from the group consisting of an amino group (a monosubstituted amino group or a disubstituted amino group), an alkoxysilyl group, or a hydroxyl group, by hydrolysis or the like after the hydrosilylation reaction. Examples of such silicon compound include, but are not particularly limited to, hydrosilane compounds having the functional group forming at least one functional group selected from the group consisting of an amino group, an alkoxysilyl group, and a hydroxyl group, specifically by hydrolysis or the like. More specifically hydrosilane compounds having a protected monosubstituted amino group, a protected disubstituted amino group, a protected hydroxyl group, and the like. Examples of the "protected hydroxyl group" include those in which hydrogen of the hydroxyl group is substituted with a trimethylsilyl group.

Specific examples of silicon compounds having an alkoxy group include, but are not particularly limited to, organosiloxane compounds having a H-Si group and an alkoxysilyl group in the molecule, such as dimethylmonomethoxysilane, dimethylmonoethoxysilane, dimethylmonopropoxysilane, dimethylmonobutoxysilane, methyldimethoxysilane, methyldiethoxysilane, methyldipropoxysilane, ethyldiethoxysilane, trimethoxysilane, and triethoxysilane.

Specific examples of silicon compounds having a disubstituted amino group include, but are not particularly limited to, dimethylaminodimethylsilane, diethylaminodimethylsilane, diethylaminodiethylsilane, 3-diethylaminopropyldimethylsilane, 4-dimethylaminobutyldimethylsilane, and 6-diethylaminohexyldimethylsilane.

Specific examples of silicon compounds having a protected monosubstituted amino group include, but are not particularly limited to, N-methyl-N-trimethylsilylaminodimethylsilane and N-ethyl-N-trimethylsilylaminodiethylsilane.

Specific examples of silicon compounds having a protected disubstituted amino group include, but are not particularly limited to, N,N-bistrimethylsilylaminodimethylsilane and N,N-bistrimethylsilylaminodiethylsilane.

Specific examples of silicon compounds having a protected hydroxyl group include, but are not particularly limited to, dimethyltrimethylsilyloxysilane, diethyltrimethylsilyloxysilane, and dibutyltrimethylsilyloxysilane.

Specific examples of silicon compounds forming a hydroxyl group by hydrolysis include, but are not particularly limited to, alkoxysilane compounds such as dimethylmonomethoxysilane, dimethylmonoethoxysilane, methyldimethoxysilane, trimethoxysilane, and triethoxysilane; and silane compounds having an epoxy group such as dimethylglycidylsilane and diethylglycidylsilane.

In modifying a vinyl group of the main chain of the butadiene-based polymer with a terminal modified, the amount of the hydrosilane compound to be reacted is arbitrary depending on the purpose, but is preferably 1 to 10 mol based on 1 mol of the main chain of the butadiene-based polymer. As described later, modification of 1 to 10 mol of the hydrosilane compound based on 1 mol of the main chain results in a good affinity obtained and excellent processability when the modified butadiene-based copolymer is mixed with silica to obtain a resin composition. The amount is more preferably 2 to 5 mol based on 1 mol of the main chain.

A predetermined catalyst may be used when performing the hydrosilylation reaction. The catalyst is not particularly limited, and for example, platinum or platinum-containing catalysts are mainly used. Preferably, homogeneous platinum catalysts are suitably used, and examples thereof include platinum chloride solution (i.e., Speier catalyst), $Pt_2$ $(divinyltetramethyldisiloxane)_3$ solution (i.e., Karstedt catalyst), and dichloro(η4-cyclo-1,5-diene) Pt (II). The amount of platinum catalyst to be used for the reaction per hydrosilane compound is preferably 0.01 to 10 mmol/mol and more preferably 0.1 to 1 mmol/mol.

Examples of other catalysts used in the hydrosilylation reaction include metallocene compounds containing any of Ti, Zr, Hf, Ni, Co, Ru, and Rh, and in particular, a reactant of a titanocene compound with organolithium or organoaluminum is suitable.

The hydrosilylation reaction is preferably performed in a range from 20 to 150°C, more preferably in a range from 50 to 120°C. In this range, it is possible to carry out the reaction in an appropriate amount of time, and it is practical because there are few side reactions such as gelation. In a case where the polymerization solution is used as is and the hydrosilylation reaction is performed following the terminal modification reaction, the reaction can be performed at the same temperature as the polymerization temperature. In the solution state, the reaction time is preferably in a range

from 10 minutes to 5 hours and more preferably in a range from 30 minutes to 2 hours.

The weight average molecular weight (in terms of polystyrene) of the modified conjugated diene-based copolymer of the present invention is preferably 100,000 to 2,000,000 and more preferably 150,000 to 1,000,000 in consideration of processability and physical properties. The weight average molecular weight can be determined from a calibration curve using standard polystyrene by measuring a chromatogram using GPC with a column packed with polystyrene gel as a filling agent.

An area of a region corresponding to a number average molecular weight (Mn) three times or more (3Mp or more) of the number average molecular weight (Mn) at a peak at the lowest molecular weight side may be 10% or more based on a total area of 100% in a differential molecular weight distribution curve obtained by gel permeation chromatography (GPC) measurement. The area is more preferably 20% by area or more and particularly preferably 25 to 80% by area.

The modified conjugated diene-based copolymer of the present invention preferably contains 0.001 to 6% by weight of a structural unit (A1) derived from a modified vinylaromatic copolymer, 29 to 99.999% by weight of a structural unit (B1) derived from a conjugated diene compound, and 0 to 70% by weight of a structural unit (C1) derived from an aromatic vinyl compound.

The proportion of the structural unit (A1) derived from the modified vinylaromatic copolymer (A) is preferably 0.001 to 5% by weight, more preferably 0.005 to 5% by weight, further preferably 0.01 to 5% by weight, and optimally 0.001 to 1% by weight. The proportion of the structural unit (B1) derived from the conjugated diene compound (B) is 29 to 99.999% by weight, preferably 80 to 99.999% by weight, more preferably 90 to 99.995% by weight, and further preferably 95 to 99.99% by weight.

In a case where the aromatic vinyl compound (C) is used, the proportion of the structural unit (A1) is in the same range as the above, and the proportion of the structural unit (B1) is 30 to 97.999% by weight, preferably 45 to 94.995% by weight, and further preferably 55 to 89.99% by weight. The proportion of the structural unit (C1) derived from the aromatic vinyl compound (C) is 2 to 50% by weight, preferably 5 to 45% by weight, and further preferably 10 to 40% by weight.

The microstructure (cis, trans, and vinyl bond amount) of the modified conjugated diene-based copolymer can be arbitrarily changed by use of a polar compound or the like, but the content of the vinyl bond (1,2-bond) in the conjugated diene unit is preferably 10 to 80% by mol in a state before the terminal is modified. In a case where the modified conjugated diene-based copolymer of the present invention is used as the resin composition described below and further crosslinked to use as an automobile tire, the content thereof is preferably 20 to 75% by mol, more preferably 25 to 75% by mol, and further preferably 25 to 70% by mol to achieve a high level of balance between the rolling resistance performance and the wear resistance. The content is optimally 25 to 45% by mol. In this case, the mass ratio of a cis bond to a trans bond in the conjugated diene bond unit is preferably cis bond/trans bond = 1/1.1 to 1.5.

A reaction terminator may be added if necessary to the polymeric solution of the modified conjugated diene-based copolymer to be obtained in the polymerization method described above. The reaction terminators usable are, for example, alcohols such as methanol, ethanol, and propanol; organic acids such as stearic acid, lauric acid, and octanoic acid; and water.

After the polymerization reaction of the modified conjugated diene-based copolymer is performed, metals contained in the polymer may be demineralized if necessary. As a demineralization method, for example, a method of bringing water, an organic acid, an inorganic acid, or an oxidant such as hydrogen peroxide into contact with a polymeric solution to extract metals and then separating a water layer is used.

In a case where the modified conjugated diene-based polymer obtained as described above can be obtained as a solution, the solvent can be removed and dried in the usual manner after the addition of an antioxidant and an additive if necessary. Thereby, the polymer can be used as a raw material for the resin composition described later. Specific examples of the methods include steam stripping and dehydration drying methods, and direct dewatering methods using a drum dryer, flushing, and a vent extruder.

The antioxidants are not particularly limited, and any known antioxidant can be used. Examples of the antioxidants include phenolic stabilizers, phosphorus-based stabilizers, and sulfur-based stabilizers. By way of specific example, antioxidants such as 2,6-di-tert-butyl-4-hydroxytoluene (BHT), n-octadecyl-3-(4'-hydroxy-3',5'-di-tert-butylphenol) propinate, and 2-methyl-4,6-bis[(octylthio)methyl]phenol are preferable.

If necessary, water, alcohols such as methanol, ethanol, isopropanol, or the like may be added as an additive to remove or neutralize ionic substances, and carboxylic acids such as stearic acid, oleic acid, myristic acid, lauric acid, decanoic acid, citric acid, and malic acid, inorganic acid aqueous solutions, carbon dioxide, or the like may also be added.

The resin composition of the present invention contains 100 parts by mass of raw material rubber containing 20 parts by mass or more of the modified conjugated diene-based polymer, and 5 to 200 parts by mass of the filler.

The content of the modified conjugated diene-based polymer in 100 parts by mass of raw material rubber is 20 parts by mass or more, preferably 40 parts by mass or more, more preferably 50 parts by mass or more, and further preferably 60 parts by mass or more. If the content is 20 parts by mass or more, the filler dispersibility, which is the

purpose of the present invention, is excellent, and the performance such as tensile properties and viscoelastic properties, is excellent in a case where the rubber composition of the present embodiment is used as a vulcanized composition, and excellent fuel consumption performance, grip performance, wear resistance, and rigidity are obtained in the case of using it as a material for tires. The content of the modified conjugated diene-based polymer is preferably 90 parts by mass or less, and more preferably 80 parts by mass or less. When the content of the modified conjugated diene-based polymer is set as 90 parts by mass or less, the Mooney viscosity of the unvulcanized resin composition of the present invention is reduced to result in enhancement in processability.

Examples of raw material rubbers other than the modified conjugated diene-based polymers include, but are not particularly limited to, conjugated diene-based polymers or hydrogenated substances thereof, random copolymers of a conjugated diene-based compound and a vinylaromatic compound or hydrogenated substances thereof, block copolymers of a conjugated diene-based compound and a vinylaromatic compound or hydrogenated substances thereof, the other conjugated diene-based copolymers or hydrogenated substances thereof, non-diene-based polymers, and natural rubbers.

Specific examples of the conjugated diene-based polymer or hydrogenated substances thereof include, but are not particularly limited to, butadiene rubber or hydrogenated substances thereof, and isoprene rubber or hydrogenated substances thereof.

Specific examples of random copolymers of the conjugated diene-based compound and the vinylaromatic compound or hydrogenated substances thereof include, but are not particularly limited to, styrene-butadiene copolymerized rubbers or hydrogenated substances thereof.

Specific examples of block copolymers of the conjugated diene-based compounds and the vinylaromatic compound, or hydrogenated substances thereof, include, but are not particularly limited to, styrene-based elastomers such as styrene-butadiene block copolymers or hydrogenated substances thereof, and styrene-isoprene block copolymers or hydrogenated substances thereof.

Specific examples of other conjugated diene-based copolymers or hydrogenated substances thereof include, but are not particularly limited to, acrylonitrile-butadiene rubbers or hydrogenated substances thereof.

Examples of the non-diene-based polymers include, but are not particularly limited to, olefinic elastomers such as ethylene-propylene rubber, ethylene-propylene-diene rubber, ethylene-butene-diene rubber, ethylene-butene rubber, ethylene-hexene rubber, and ethylene-octene rubber, butyl rubber, brominated butyl rubber, acrylic rubber, fluororubber, silicone rubber, chlorinated polyethylene rubber, epichlorohydrin rubber, $\alpha$, $\beta$-unsaturated nitrile-acrylate ester-conjugated diene copolymer rubber, urethane rubber, and polysulfide rubber.

In the present invention, the other rubber is preferably polybutadiene in a case where the modified conjugated diene-based polymer is a modified styrene-butadiene rubber. In a case where the modified butadiene-based polymer is modified polybutadiene, the other rubber is preferably natural rubber or polyisoprene rubber.

The weight average molecular weight of the various rubbery polymers described above is preferably 2,000 to 2,000,000, and more preferably 5,000 to 1,500,000, from the viewpoint of balance between performance and processing properties. So-called liquid rubber of low molecular weight can also be used. These rubbery polymers may be used alone, or two or more thereof may be used in combination. The weight average molecular weight here is a weight average molecular weight (Mw) in terms of polystyrene obtained by gel permeation chromatography (GPC) measurement.

The amount of filler used for the raw material rubber is adjusted to achieve the desired physical properties according to the application, as the hardness and modulus increase when the filler is used more. Within this range, the filler has good dispersion and good processability. The amount of the filler is preferably 5 to 150 parts by mass for tire applications, and preferably 30 to 200 parts by mass for footwear applications. In the range of the present embodiments, it is possible to handle a wide range of soft and hard materials.

The resin composition of the present invention includes 0.5 to 200 parts by mass of at least one reinforcing filling agent selected from the group consisting of a silica-based inorganic filling agent, metal oxide, metal hydroxide, and carbon black based on 100 parts by mass of the raw material rubber.

As a silica-based inorganic filling agent contained in the resin composition, solid particles containing $SiO_2$ or a silicate as a main component of the structural unit are preferably used. Here, the main component means a component that occupies 50% by mass or more of the whole, preferably 70% by mass or more, and more preferably 90% by mass or more.

Specific examples of silica-based inorganic filling agents include inorganic fibrous materials such as silica, clay, talc, mica, diatomaceous earth, wollastonite, montmorillonite, zeolite and glass fibers. The silica-based inorganic filling agent may be used alone, or two or more thereof may be used in combination. A silica-based inorganic filling agent whose surface has been hydrophobicized, and a mixture of a silica-based inorganic filling agent and an inorganic filling agent other than silica types can also be used. Among them, silica and glass fiber are preferable, and silica is more preferable.

The silica usable is fumed silica, wet silica, synthetic silicate silica, and the like, but above all, wet silica is preferable because it is more excellent in both improvement of fracture characteristics and wet skid resistance performance.

The silica with a BET specific surface area of 50 to 500 $m^2/g$ is used as the silica. The blending of such silica provides excellent fuel efficiency, wear resistance, wet skid performance and handling stability.

In addition, silica with a high specific surface area, i.e., particulate silica, can be well dispersed. The particulate silica can contain silica with a CTAB (cetyltrimethylammonium bromide) specific surface area of 180 $m^2/g$ or more or a BET specific surface area of 185 $m^2/g$ or more. The average primary particle size is, for example, 25 nm or less. The blending of such particulate silica provides the resin composition of the present embodiment with excellent low fuel efficiency, wear resistance, wet skid performance and handling stability.

The aggregate size of the particulate silica is not particularly limited and can be 30 nm or more. Such an aggregate size can provide excellent reinforcing properties, fuel efficiency, wear resistance, wet skid performance, and handling stability, while having good dispersibility. The aggregate size is also known as the aggregate diameter or the maximum frequency Stokes equivalent diameter, and is equivalent to the particle size when a silica aggregate consisting of multiple primary particles is regarded as a single particle. The aggregate size can be measured, for example, using a disc centrifugal settling particle size distribution measurement apparatus such as BI-XDC (manufactured by Brookhaven Instruments Corporation). Specifically, it can be measured by the method described in Japanese Patent Laid-Open No. 2011-132307.

The average primary particle size of the particulate silica is not particularly limited, and is preferably 25 nm or less.

The amount of the particulate silica blended in the resin composition of the present invention is not particularly limited and is preferably 5 parts by mass or more, more preferably 15 parts by mass or more, further preferably 20 parts by mass or more, further more preferably 25 parts by mass or more, and even more preferably 30 parts by mass or more, based on 100 parts by mass of the rubber component. If the amount is 5 parts by mass or more, the effect of blending particulate silica is sufficiently obtained. The amount of the particulate silica blended is 200 parts by mass or less, preferably 100 parts by mass or less, more preferably 80 parts by mass or less, further preferably 60 parts by mass or less, and further more preferably 55 parts by mass or less. If the amount is 200 parts by mass or less, substantially good processability is obtained.

The resin composition of the present invention is preferably the above resin composition further containing silica with a BET specific surface area of less than 185 $m^2/g$ as a reinforcing filling agent or 5 to 100 parts by mass of carbon black.

In the resin composition of the present invention, furthermore, silica with a BET method nitrogen adsorption specific surface area (N2SA) of less than 185 $m^2/g$ is preferably used as a reinforcing filling agent, silica with a N2SA of less than 150 $m^2/g$ is further preferably used, and silica with a N2SA of 50 $m^2/g$ or more is preferably used. In this range, there is a good balance between reinforcing properties and dispersibility. In addition, suitable particle sizes are used according to the application.

Carbon blacks include N110, N220, N330, N339, N550, N660, or the like from the classification of carbon blacks for rubber by ASTM, and are selected according to the application. The combined use of carbon black can increase reinforcing properties and enhance dry-grip performance when used in tire tread applications. Carbon black to be used has a BET method nitrogen adsorption specific surface area (N2SA) of preferably less than 185 $m^2/g$, preferably 30 $m^2/g$ or more, and more preferably in a range from 50 to 130 $m^2/g$. In this range, there is a good balance between reinforcing properties and dispersibility. The carbon black is further preferably N220, N330, and N339 when used in tire tread applications.

In addition to the silica described above, other reinforcing filling agent can be further used in the resin composition of the present invention. Such other reinforcing filling agents are not particularly limited, and metal oxides as reinforcing filling agent are preferably solid particles with a component having the chemical formula MxOy (M represents a metal atom, and x and y each represent an integer of 1 to 6.) as the main constituent component. Here, the main component means a component that occupies 50% by mass or more of the whole, preferably 70% by mass or more, and more preferably 90% by mass or more.

Examples of the metal oxides usable include alumina, titanium oxide, magnesium oxide, and zinc oxide.

Examples of the metal hydroxides used as reinforcing filling agents include aluminum hydroxide, magnesium hydroxide, and zirconium hydroxide.

The metal oxides and the metal hydroxides as such other reinforcing filling agents may be used alone, or two or more kinds thereof may be in combination. Mixtures with inorganic filling agents other than these can also be used.

A silane coupling agent may also be used in the resin composition of the present invention. Examples of the silane coupling agents include, but are not particularly limited, compounds having both a silica affinity moiety and a polymer affinity moiety in the molecule, such as sulfide-based compounds, mercapto-based compounds, vinyl-based compounds, amino-based compounds, glycidoxy-based compounds, nitro-based compounds, and chloro-based compounds.

Examples of the sulfide-based compounds include bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N,-dimethylthiocarbamoyl tetrasulfide, 3-triethoxysilylpropyl-N,N,-dimethylthiocarbamoyl tetrasulfide, 2-trimethoxysilylethyl-N,N-dimethylthiocarbamoyl tetrasulfide, 3-trimethoxysilylpropylbenzothiazole tetrasulfide, 3-triethoxysilylpropylbenzothiazole tetrasulfide, 3-triethoxysilylpropyl methacrylate monosulfide, 3-trimethoxysilylpropyl methacrylate monosulfide, and 3-octanoylthio-1-propyltriethoxysilane.

Examples of the mercapto-based compounds include 3-mercaptopropyltrimethoxysilane, 3-mercaptopropyltriethoxysilane, 2-mercaptoethyltrimethoxysilane, and 2-mercaptoethyltriethoxysilane.

Examples of the vinyl-based compounds include vinyltriethoxysilane and vinyltrimethoxysilane.

Examples of the amino-based compounds include 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane.

Examples of the glycidoxy-based compounds include γ-glycidoxypropyltriethoxysilane, γ-glycidoxypropyltrimethoxysilane, γ-glycidoxypropylmethyldiethoxysilane, and γ-glycidoxypropylmethyldimethoxysilane.

Examples of the nitro-based compounds include 3-nitropropyltrimethoxysilane and 3-nitropropyltriethoxysilane.

Examples of chloro-based compounds include 3-chloropropyltrimethoxysilane, 3-chloropropyltriethoxysilane, 2-chloroethyltrimethoxysilane, and 2-chloroethyltriethoxysilane.

Examples of the other compounds include octyltriethoxysilane, methyltriethoxysilane, methyltrimethoxysilane, and hexadecyltrimethoxysilane.

Such silane coupling agents may be used alone or two or more kinds thereof may be in combination. Among these silane coupling agents, sulfur-containing silane coupling agents such as sulfide-compounds and mercapto-compounds are preferable from the viewpoint of the large reinforcing effect, and bis(3-triethoxysilylpropyl)disulfide, bis(3-triethoxysilylpropyl)tetrasulfide, and 3-mercaptopropyltrimethoxysilane are more preferable.

The amount of the silane coupling agent blended is 1 to 20 parts by mass and preferably 2 to 15 parts by mass, based on 100 parts by mass of silica. When the silane coupling agent is blended in this range, the performance of vulcanized rubber is improved, such as better dispersibility of silica, better processability, and more enhancement in wear resistance.

In the resin composition of the present invention, it is possible to adjust the hardness and modulus by use of plasticizers. The plasticizers are not particularly limited, and for example, the same oils as the above extensibility oils are usable, and in addition, various natural product oils, synthetic oils, low molecular weight polymers or the like can be used. In addition, known processing auxiliaries can be used.

The resin composition of the present invention may be a resin composition that has been subjected to a crosslinking treatment by adding a vulcanizing agent (crosslinking agent), a blending agent, and the like thereto. Such a crosslinking agent is not particularly limited, and for example, a sulfur-based vulcanizing agent, an organic peroxide, and the like are used.

The sulfur-based vulcanizing agent is not particularly limited, and for example, sulfur and morpholinedisulfide are used, while benzoyl peroxide, dicumyl peroxide, di-t-butyl peroxide, t-butylcumyl peroxide, cumene hydroperoxide, and the like are used as organic peroxides, for example.

The amount of vulcanizing agent used is not particularly limited, and is preferably 0.01 to 20 parts by mass, and more preferably 0.1 to 15 parts by mass, based on 100 parts by mass of the conjugated diene-based copolymer. As the vulcanization method, conventionally known methods can be applied, and the vulcanization temperature is preferably, for example, at 120°C to 200°C, and more preferably 140°C to 180°C.

A vulcanization accelerator or a vulcanization aid may be added if necessary. As the vulcanization accelerator, which is not particularly limited, for example, at least one of the following can be used: sulfenamide, thiazole, thiuram, thiourea, guazinine, dithiocarbamate, aldehyde-amine or aldehyde-ammonia, imidazoline, or xanthate vulcanization accelerators.

In addition, a vulcanization aid may be added if necessary. As a vulcanization aid, which is not particularly limited, for example, zinc oxide and stearic acid can be used. Furthermore, an anti-aging agent can be used.

The resin composition of the present invention can be produced by mixing each of the above components.

A method of mixing the modified conjugated diene-based copolymer with at least one reinforcing filling agent selected from the group consisting of a silica-based inorganic filling agent, a metal oxide, a metal hydroxide, and carbon black, and if desired, a silane coupling agent, is not particularly limited. Examples thereof include melt kneading method using a usual mixture such as an open roll, a Banbury mixer, a kneader, a single-screw extruder, a twin-screw extruder, or a multi-screw extruder, and a method in which each component is dissolved and mixed, and then the solvent is heated and removed. Above all, the melt kneading method using a roll, Banbury mixer, a kneader, or an extruder is preferable from the viewpoint of productivity and good kneading properties. Either of a method of kneading the rubber component and various blending agents at one time and a method of mixing them in plurality of times is applicable.

In the present invention, the degree of polymer concentration capacity on the filling material surface can be expressed by the bound rubber amount (bound rubber production ability) of the modified conjugated diene-based polymer at 25°C. The bound rubber amount in the resin composition after the completion of kneading described above is preferably

15% by mass or more, and more preferably 20% by mass or more, from the viewpoint of improvement of wear resistance and fracture strength.

The resin composition may be a vulcanized composition that has been subjected to a vulcanization treatment with a vulcanizing agent. As the vulcanizing agents, for example, radical generating agents such as organic peroxides and azo compounds, oxime compounds, nitroso compounds, polyamine compounds, sulfur, and sulfur compounds can be used. The sulfur compounds include sulfur monochloride, sulfur dichloride, disulfide compounds, and polymeric polysulfide compounds.

In vulcanization, a vulcanization accelerator may be used if necessary. As a vulcanization accelerator, conventionally known materials can be used, and examples thereof include sulfenamides, guanidines, thiurams, aldehyde-amines, aldehyde-ammonias, thiazoles, thioureas, and dithiocarbamates. As a vulcanization aid, zinc oxide, stearic acid, and the like can be used.

To the resin composition of the present invention, a rubber softener may be blended to improve the processability. As a rubber softener, mineral oil, or a liquid or low molecular weight synthetic softener is suitable.

A mineral oil-based rubber softener called process oil or extender oil used to improve the softening, volume increase, and processability of rubbers is a mixture of aromatic rings, naphthene rings and paraffin chains; the mineral oil-based rubber softener in which the carbon number of the paraffin chain accounts for 50% or more of the total carbon is called a paraffin type, one in which the carbon number of the naphthene ring accounts for 30 to 45% is called a naphthene type, and one in which the aromatic carbon number exceeds 30% is called an aromatic type. As a rubber softener used in the present embodiment, the naphthene type and/or the paraffin type is preferable.

The amount of the rubber softener blended is not particularly limited, and is preferably 10 to 80 parts by mass and more preferably 20 to 50 parts by mass based on 100 parts by mass of the conjugated diene-based copolymer.

In the resin composition of the present invention, various additives such as softeners and filling agents other than those described above, as well as heat stabilizers, antistatic agents, weather-resistant stabilizers, anti-aging agents, colorants, and lubricants may be used to the extent that the purpose of the present embodiment is not impaired. Specific examples of the filling agents include calcium carbonate, magnesium carbonate, aluminum sulfate, and barium sulfate.

Examples of the softeners blended if necessary to adjust the hardness and fluidity of a target product include liquid paraffin, castor oil, and linseed oil. Known materials can be applied as a heat stabilizer, an antistatic agent, a weather-resistant stabilizer, an anti-aging agent, a colorant, and a lubricant.

The crosslinked resin product of the present invention can be obtained by subjecting the resin composition to a crosslinking treatment. For example, a tire can be produced by extruding and molding the rubber composition according to the shape of the tire (specifically, the shape of a tread), heating and pressurizing it in a vulcanizing machine to produce the tread, and assembling the tread with other parts to produce the target tire.

The resin composition of the present invention has excellent mechanical strength and wear resistance if it is made into a crosslinked resin product. Therefore, as described above, the composition can be suitably applied to a structural member such as fuel-efficient tires, large tires, high-performance tires, and tire members such as sidewall members. In addition to the structural member, the composition can be suitably used for rubber belts, rubber hoses, footwear materials, and the like.

Examples

The present invention is described in more detail below, but the present invention is not limited to these Examples. Unless otherwise specified, the parts in each example are parts by weight, and the evaluation of each physical property was performed by the method shown below.

1) Molecular Weight and Molecular Weight Distribution, and Area (%) of Multi-Branched Component and Area (%) Corresponding to 3Mp or more

The molecular weight and molecular weight distribution measurements were performed using GPC (HLC-8220 GPC, manufactured by Tosoh Corporation) as well as TSKgel Multipore $H_{XL}$-M: 2 columns and TSKgel G1000$H_{XL}$: one column, as analysis columns, and TSK guard column MP (XL): one column, as a guard column, manufactured by Tosoh Corporation, with tetrahydrofuran (THF) as a solvent, a flow rate of 1.0 ml/min, a column temperature of 38°C, and a calibration curve with monodisperse polystyrene.

The area (%) with respect to a multi-branched component indicates percent(s) by area of a molecular weight range of a molecular weight two times (2Mp) or more of the peak top molecular weight Mp of an unbranched diene-based copolymer not coupled, as shown in Figure 1. Furthermore, the area (%) corresponding to 3Mp or more indicates percent(s) by area of a molecular weight range of a molecular weight three times (3Mp) or more of the peak top molecular weight Mp of an unbranched diene-based copolymer not coupled.

2) Structure of Modified Vinylaromatic Copolymer

The structure was determined using a JNM-LA600 nuclear magnetic resonance spectrometer manufactured by JEOL Ltd. through $^{13}$C-NMR and $^{1}$H-NMR analysis. Chloroform-$d_1$ was used as the solvent, and a resonance line of tetramethylsilane was used as an internal standard.

3) Solvent solubility (cyclohexane)

In 95.0 g of cyclohexane was dissolved 5.0 g of the modified vinylaromatic copolymer, the solution was filtered with a glass filter, the glass filter after filtration was washed with 30 g of cyclohexane, and the glass filter was dried in vacuum at 60°C. The weight of the polymer fraction on the filter was calculated, and a dry weight of the polymer fraction of less than 0.025 g was determined as O, a dry weight of the polymer fraction of 0.025 g or more and less than 0.25 g was determined as Δ, and a dry weight of the polymer fraction of 0.25 g or more was determined as ×.

4) Mooney Viscosity

According to JIS K6300-1, the Mooney viscosity was determined with an L-shaped rotor, preheating for 1 minute, a rotor operation time of 4 minutes, and temperature of 100°C.

5) Gel fraction

To a sample prepared by dissolving 0.5 g of copolymer rubber in 100 mL of toluene was added 1.0 g of a 0.2 wt% Sudan III toluene solution, and left to still stand for 1 hour. This sample solution was filtered with a 0.2-μm PTFE membrane filter, and the membrane filter was dried in vacuum at 40°C. A gel fraction colored by Sudan III, on the membrane filter dried, was visually observed, and a number of such gel fractions of 0 was determined as O, a number of 1 to 5 was determined as Δ, and a number of 6 was determined as ×.

6) Thermogravimetric measurement (TGA)

The weight loss at 350°C ($TGA_{350}$) was determined according to JIS K7120.

7) Haze

A sample prepared by dissolving 0.5 g of copolymer rubber in 100 g of toluene was put into a quartz cell, and the Haze (turbidity) thereof was measured using an integrating sphere type light transmittance measurement device (SZ-Σ90, manufactured by NIPPON DENSHOKU INDUSTRIES CO., LTD.) with toluene as a reference sample.

8) Content of Vinyl Bond of Conjugated Diene-Based Copolymer (SBR)

A carbon disulfide solution was used as a sample, an infrared spectrum was measured in a range from 600 to 1000 cm-1 using a solution cell, and a vinyl bond amount (%) in a conjugated diene-based copolymer (SBR) was determined according to the calculation formula of Hampton (styrene-butadiene copolymer) method with the absorbance at a predetermined wavenumber. A Spectrum 100 manufactured by PerkinElmer Co., Ltd. was used as the device.

9) Bound rubber amount

After kneading, 0.4 g of unvulcanized rubber was cut into a 2-mm square and put into a sample tube, together with 50 mL of toluene, and left to still stand at room temperature for 48 hours. Thereafter, the resultant was extracted with a glass filter, and a toluene solution portion and a rubber portion were each dried. The weight of the rubber portion on the filter was calculated and determined as a bound rubber amount. The toluene solution portion further dried was dissolved in chloroform, the proportion of polybutadiene was calculated with proton NMR, and this value was used for back calculation from the number of actual blending parts, thereby determining the bound rubber amount of polybutadiene. The amount was expressed with an index by setting the bound rubber amount in Comparative Example 3 as 100.

10) Tensile strength

A 300% modulus was measured by a tensile test method according to JIS K6251, and indexed by setting a measurement value of the crosslinked rubber obtained in Comparative Example 3 as 100. A larger index value indicates

better tensile strength.

11) Wear resistance

The wear amount with a slip rate of 25% was measured using a method of using Lambourn-type wear testing machine in accordance with JIS K6264, and indexed by setting a measurement value of the crosslinked rubber obtained in Comparative Example 3 as 100. The measurement temperature was room temperature. The larger the index value, the better the wear resistance.

The raw materials used in Examples or abbreviations thereof are as follows.

DVB-630; mixture of divinylbenzene component and ethylvinylbenzene component; divinylbenzene component content 63.0 wt%, manufactured by NIPPON STEEL Chemical & Material Co., Ltd.
BHT; 2,6-di-tert-butyl-p-cresol
BTESPA; bis(3-trimethoxysilylpropyl)methylamine

Example 1 Synthesis of modified vinylaromatic copolymer (A-1)

120 ml (93.5 g) of ethylcyclohexane and 0.77 ml (4.0 mmol) of 2,2-di(2-tetrahydrofuryl)propane were charged and 12.5 ml of a n-hexane solution containing 1.28 g (20.0 mmol) of n-butyllithium as pure content was added at 50°C, followed by the addition of a mixture of 2.12 g of DVB-630 (mixture of the following structural formula) (10.0 mmol of a divinylbenzene (mixture of m-isomer and p-isomer) component and 6.26 mmol of an ethylvinylbenzene (mixture of m-isomer and p-isomer) component) and

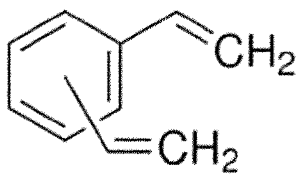

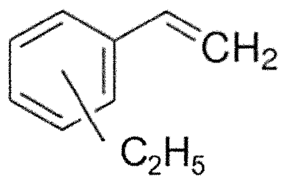

12.89 g (123.7 mmol) of styrene (the following structural formula),

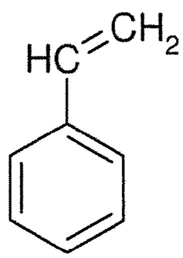

which had been cleared of impurities in advance, to initiate the polymerization in the first stage. The temperature of the reaction solution increased due to the polymerization heat, reaching a maximum temperature of 72°C. After the completion of the polymerization reaction, a small amount of the polymerization solution was sampled and analyzed by gas chromatograph (GC), and no unreacted monomer was observed and the polymerization conversion was confirmed to be almost 100%. GPC analysis was performed, and the copolymer on the completion of the polymerization in the first stage had an Mn of 1730, an Mw of 3390, and an Mw/Mn of 1.96.

As an additional monomer, 4.09 g (20.0 mmol) of isoprene (the following structural formula)

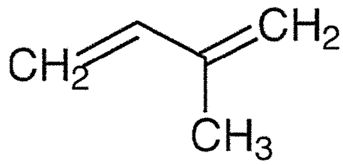

was added to the reactor, to initiate the polymerization in the second stage. After the completion of the polymerization reaction in the second stage, a small amount of the polymerization solution was sampled and subjected to GC analysis, and no unreacted monomer was observed and the polymerization conversion was confirmed to be almost 100%. GPC analysis was performed, and the copolymer on the completion of the polymerization in the second stage had an Mn of 2150, an Mw of 4340, and an Mw/Mn of 2.02. The GPC elution curve of the sample after the completion of the polymerization in the first stage and the elution curve of the sample after the completion of the polymerization in the second stage were compared, and it was thus confirmed that the GPC elution curve was shifted toward the higher molecular weight side with almost the same molecular weight distribution being kept by the addition of isoprene as a fourth monomer and a substantially total amount of the active species at the terminal was converted into isoprene-derived carbanion.

Then, 7.27 g (20.0 mmol) of 1-(3-triethoxysilylpropyl)-2,2,5,5-tetramethyl-1-aza-2,5-disilacyclopentane (TESPTADSP) was added as a modifying agent and subjected to a modification reaction for 2 hours to obtain a polymer solution containing a modified vinylaromatic copolymer. After the completion of the polymerization reaction, 4.72 g (40.0 mmol) of succinic acid was added and stirred, and then filtration was performed.

TESPTADSP was a modifying agent having not only an alkoxysilyl group, but also an amino group, as represented by the following formula (2).

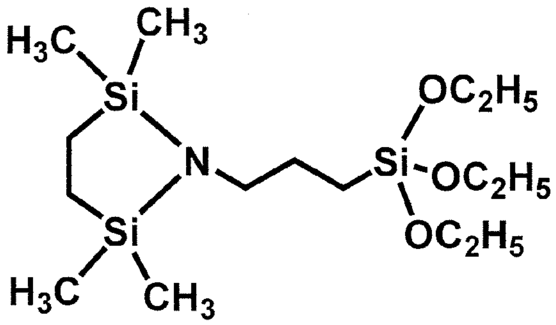

(2)

The obtained polymerization solution was concentrated by devolatilization and then dissolved in ethylcyclohexane, and neither a gel, nor a microgel was confirmed to be generated. Next, in order to remove unreacted TESPTADSP, methanol was added to such an ethylcyclohexane solution of a modified vinylaromatic copolymer to perform separation into two layers and remove a fraction soluble in methanol, and then such an ethylcyclohexane solution containing a modified vinylaromatic copolymer was concentrated by devolatilization and then dissolved in ethylcyclohexane. As a result, 25.05 g (yield: 95.0 wt%) of a modified vinylaromatic copolymer A-1 was obtained in solid content equivalent yield.

The analysis results of the modified vinylaromatic copolymer A-1 are shown in Table 1.

The obtained modified vinylaromatic copolymer A-1 had an Mn of 2650, an Mw of 5560, and an Mw/Mn of 2.10. It was confirmed by performing GC analysis, $^{13}C$-NMR and $^{1}H$-NMR analysis that the modified vinylaromatic copolymer A-1 contained 4.55% by mol (4.94 wt%) of a divinylbenzene-derived structural unit, 2.84% by mol (3.09 wt%) of an ethylvinylbenzene-derived structural unit, 56.25% by mol (48.88 wt%) of a structural unit derived from styrene, 27.27% by mol (15.50 wt%) of a structural unit derived from isoprene, and 9.09% by mol (27.59 wt%) of a structural unit derived from 1-(3-triethoxysilylpropyl)-2,2,5,5-tetramethyl-1-aza-2,5-disilacyclopentane (TESPTADSP), and 2.01 modifying agents per molecule of the modified vinylaromatic copolymer were introduced thereinto. The crosslinked structural unit (a1) derived from the divinylaromatic compound represented by the formula (1) was 4.36% by mol (4.74 wt%) and the degree of crosslinking (a1/a) was 0.96. Since the divinylbenzene-derived structural unit (a2) having a residual vinyl group, contained in the modified vinylaromatic copolymer (A-1), was 0.18% by mol (0.20 wt%), a molar fraction of the vinyl group-containing structural unit (a2) to the sum of structural units (a) and (b) was 0.002. In addition, about 100% by mol of the structural unit derived from TESPTADSP was bound to the structural unit derived from isoprene.

As a result of thermogravimetric measurement (TGA), the weight loss at 350°C ($TGA_{350}$) was 0.72 wt%. When a sample prepared by dissolving 0.5 g of the modified vinylaromatic copolymer (A-1) in 100 g of toluene was put into a quartz cell and the Haze (turbidity) thereof was measured using an integrating sphere type light transmittance measurement device with toluene as a reference sample, the Haze value was 0.02.

Comparative Example 1 Synthesis of modified vinylaromatic copolymer (B-1)

In a 3.0-L reactor, 4.37 mol (630.2 mL) of divinylbenzene (mixture of 1,4-divinylbenzene and 1,3-divinylbenzene, the same also applied to the following examples), 3.34 mol (457.5 mL) of ethylvinylbenzene (mixture of 1-ethyl-4-vinylbenzene and 1-ethyl-3-vinylbenzene, the same also applied to the following examples), 6.90 mol (749.9 mL) of anisole, and 345 mL of toluene were placed. At 50°C, 103.5 mmol (13.0 mL) of a boron trifluoride-diethyl ether complex was added to the reactor and reacted for 5 hours. After stopping the polymerization solution with a sodium hydrogen carbonate aqueous solution, an oil layer was washed with pure water three times and devolatilized at 60°C under reduced

pressure to recover a polymer. The resulting polymer was weighed, and 945.3 g of a copolymer B-1 was confirmed to be obtained.

The obtained copolymer B-1 had an Mn of 624, an Mw of 2360, and an Mw/Mn of 3.79, and was a random copolymer. $^{13}C$-NMR and $^{1}H$-NMR analysis were performed, and a resonance line of a terminal group where an anisole-derived benzene ring was bound to the main chain terminal was observed in an NMR chart of the copolymer B-1.

The amount of introduction of an anisole-derived structural unit in a soluble polyfunctional vinylaromatic polymer, calculated from the elemental analysis results and the number average molecular weight in terms of standard polystyrene, was 1.6 (units/molecule). The polymer contained 61.3% by mol of a divinylbenzene-derived structural unit and 38.7% by mol in total of an ethylvinylbenzene-derived structural unit (excluding a terminal structural unit). The vinyl group content in the copolymer B-1 was 34.8% by mol (excluding a terminal structural unit).

As a result of TMA measurement of a cured product, no distinct Tg was observed and the softening temperature was 300°C or more. As a result of TGA measurement, the weight loss at 350°C was 3.70 wt% and heat discoloration resistance was determined as O.

The copolymer B-1 was soluble in toluene, xylene, THF, dichloroethane, dichloromethane, and chloroform without gel generation observed.

Comparative Example 2 Synthesis of polysiloxane-modified crosslinked polymer particle (C-1)

In a reaction vessel, 45 parts of divinylbenzene (purity 56%, 38% of the balance, corresponding to ethylvinylbenzene, and 6% of the balance, corresponding to impurities, this divinylbenzene was used hereinafter), 55 parts of styrene, 3 parts of sodium dodecylbenzenesulfonate, 0.5 parts of polyvinyl alcohol, 1000 parts of ion-exchange water, and 0.7 parts of $\alpha,\alpha'$-azoisobutyronitrile were charged, and stirred and thus made homogeneous by a homomixer at 15,000 rpm for 60 minutes. Next, these were heated to 80°C with a nitrogen gas being blown thereinto, and continued to be stirred for 3 hours to perform suspension polymerization, obtaining a polymer particle (C-0). Next, the pH was adjusted to 8.0 in the state where the temperature of the reaction vessel was kept at 25°C, and 30 parts of methyltriethoxysilane (MTES) was added thereto and strongly stirred over about 30 minutes. Thereafter, the temperature of the reaction vessel was raised to 70°C, and a condensation reaction was completed by reacting for 3 hours to produce a crosslinked polymer particle C-1. No generation of any coagulate was observed in this dispersion. The average particle size of the obtained crosslinked polymer particle a was measured and was 1.9 $\mu$m. An aqueous slurry of the crosslinked polymer particle produced was centrifuged and washed, and then subjected to elemental analysis by ESCA, and the presence of a Si element was thus observed.

Example 2 Synthesis of modified vinylaromatic copolymer (D-1)

After 120 ml (93.5 g) of ethylcyclohexane and 0.77 ml (4.0 mmol) of 2,2-di(2-tetrahydrofuryl)propane were charge and 12.5 ml of a n-hexane solution containing 1.28 g (20.0 mmol) of n-butyllithium as pure content was added at 10°C, a mixture of 2.12 g pf DVB-630 (10.0 mmol of a divinylbenzene (mixture of m-isomer and p-isomer) component and 6.26 mmol of an ethylvinylbenzene (mixture of m-isomer and p-isomer) component), 1.01 g (9.7 mmol) of styrene, and 7.77 g (114.0 mmol) of isoprene, which had been cleared of impurities in advance, was added to initiate the polymerization. The temperature of the reaction solution increased due to the polymerization heat, reaching a maximum temperature of 28°C. After the completion of the polymerization reaction, a small amount of the polymerization solution was sampled and analyzed by gas chromatograph (GC), and no unreacted monomer was observed and the polymerization conversion was confirmed to be almost 100%. GPC analysis was performed, and the copolymer on the completion of the polymerization in the first stage had an Mn of 1540, an Mw of 3570, and an Mw/Mn of 2.32. As a modifying agent, 7.27 g (20.0 mmol) of 1-(3-triethoxysilylpropyl)-2,2,5,5-tetramethyl-1-aza-2,5-disilacyclopentane (TESPTADSP) was added, and the resultant was subjected to a modification reaction for 2 hours to obtain a polymer solution containing a modified vinylaromatic copolymer. After the completion of the polymerization reaction, 4.72 g (40.0 mmol) of succinic acid was added and stirred, and then filtration was performed.

The obtained polymerization solution was concentrated by devolatilization and then dissolved in ethylcyclohexane, and neither a gel, nor a microgel was confirmed to be generated. Next, in order to remove unreacted TESPTADSP, methanol was added to such an ethylcyclohexane solution of a modified vinylaromatic copolymer to perform separation into two layers and remove a fraction soluble in methanol, and then such an ethylcyclohexane solution containing a modified vinylaromatic copolymer was concentrated by devolatilization and then dissolved in ethylcyclohexane. As a result, 16.70 g (yield: 94.6 wt%) of a modified vinylaromatic copolymer D-1 was obtained in solid content equivalent yield.

The analysis results of the modified vinylaromatic copolymer D-1 are shown in Table 1.

The obtained modified vinylaromatic copolymer D-1 had an Mn of 1960, an Mw of 5150, and an Mw/Mn of 2.63. It was confirmed by performing GC analysis, $^{13}C$-NMR and $^{1}H$-NMR analysis that the modified vinylaromatic copolymer D-1 contained 6.31% by mol (7.37 wt%) of a divinylbenzene-derived structural unit, 3.94% by mol (4.61 wt%) of an

ethylvinylbenzene-derived structural unit, 6.14% by mol (5.75 wt%) of a structural unit derived from styrene, 71.88% by mol (43.98 wt%) of a structural unit derived from isoprene, and 11.72% by mol (38.29 wt%) of a structural unit derived from 1-(3-triethoxysilylpropyl)-2,2,5,5-tetramethyl-1-aza-2,5-disilacyclopentane (TESPTADSP), and 2.06 modifying agents per molecule of the modified vinylaromatic copolymer were introduced thereinto. The crosslinked structural unit (a1) derived from the divinylaromatic compound represented by the formula (1) was 5.99% by mol (7.00 wt%) and the degree of crosslinking (a1/a) was 0.95. Since the divinylbenzene-derived structural unit (a2) having a residual vinyl group, contained in the modified vinylaromatic copolymer (D-1), was 0.32% by mol (0.37 wt%), a molar fraction of the vinyl group-containing structural unit (a2) to the sum of structural units (a) and (b) was 0.004. In addition, 92.9% by mol of the structural unit derived from TESPTADSP was bound to the structural unit derived from isoprene.

As a result of thermogravimetric measurement (TGA), the weight loss at 350°C ($TGA_{350}$) was 1.16 wt%. When a sample prepared by dissolving 0.5 g of the modified vinylaromatic copolymer (D-1) in 100 g of toluene was put into a quartz cell and the Haze (turbidity) thereof was measured using an integrating sphere type light transmittance measurement device with toluene as a reference sample, the Haze value was 0.03.

The analysis results of the copolymers in Examples 1 and 2, and Comparative Example 1 are shown in Table 1.

[Table 1]

| | Ex. 1 | Comp. Ex. 1 | Comp. Ex. 2 | Ex. 2 |
|---|---|---|---|---|
| Modified vinylaromatic copolymer | A-1 | B-1 | C-1 | D-1 |
| (a) Divinylbenzene (wt%) | 4.94 | 49.58 | 19.80 | 7.37 |
| (b) Ethylvinylbenzene (wt%) | 3.09 | 31.79 | 13.43 | 4.61 |
| (b) Styrene (wt%) | 48.88 | - | 43.21 | 5.75 |
| (c) Isoprene (wt%) | 15.50 | - | - | 43.98 |
| Modifying agent | TESPTADSP | Anisole | MTES | TESPTADSP |
| Modifying agent (wt%) | 27.59 | 18.63 | 23.57 | 38.29 |
| Degree of crosslinking (a1/a) (%) | 0.96 | 43.23 | N.A. | 0.95 |
| Residual vinyl fraction (a2/(a+b+c))(%) | 0.002 | 34.8 | N.A | 0.36 |
| Amount of introduction of modifying agent per molecule of modified vinylaromatic copolymer (agents/molecule) | 2.01 | 1.60 | N.A. | 2.06 |
| Functional group bound to conjugated diene unit (% by mol) | ≈100 | 0 | 0 | 92.9 |
| Mn (g/mol) | 2620 | 624 | N.A. | 1960 |
| Mw (g/mol) | 5560 | 2360 | N.A. | 5150 |
| Mw/Mn ( - ) | 2.12 | 3.79 | N.A. | 2.63 |
| Solvent solubility (cyclohexane) | ○ | ○ | × | ○ |
| $TGA_{350}$ (wt%) | 0.72 | 3.70 | 7.8 | 1.16 |
| Haze ( - ) | 0.02 | 0.06 | N.A | 0.03 |

Example 3 Synthesis of modified vinylaromatic copolymer (E-1)

120 ml (93.5 g) of ethylcyclohexane and 0.77 ml (4.0 mmol) of 2,2-di(2-tetrahydrofuryl)propane were charge and 12.5 ml of a n-hexane solution containing 1.28 g (20.0 mmol) of n-butyllithium as pure content was added at 50°C, followed by the addition of a mixture of 2.12 g of DVB-630 (10.0 mmol of a divinylbenzene (mixture of m-isomer and p-isomer) component and 6.26 mmol of an ethylvinylbenzene (mixture of m-isomer and p-isomer) component) and styrene 12.89 g (123.7 mmol), which had been cleared of impurities in advance, to initiate the polymerization in the first stage. The temperature of the reaction solution increased due to the polymerization heat, reaching a maximum temperature of 68°C. After the completion of the polymerization reaction, a small amount of the polymerization solution was sampled and analyzed by gas chromatograph (GC), and no unreacted monomer was observed and the polymerization conversion was confirmed to be almost 100%. GPC analysis was performed, and the copolymer on the completion of the polymerization in the first stage had an Mn of 1650, an Mw of 3330, and an Mw/Mn of 2.02. As an additional monomer, 4.09 g (20.0 mmol) of isoprene was added to the reactor, to initiate the polymerization in the second stage. After the completion of the polymerization reaction in the second stage, a small amount of the polymerization solution was sampled and subjected to GC analysis, and no unreacted monomer was observed and the polymerization conversion was confirmed to be almost 100%. GPC analysis was performed, and the copolymer on the completion of the polymerization in the second stage had an Mn of 1980, an Mw of 4200, and an Mw/Mn of 2.12. The GPC elution curve of the sample after the completion of the polymerization in the first stage and the elution curve of the sample after the completion of the polymerization in the second stage were compared, and it was thus confirmed that the GPC elution curve was shifted toward the higher molecular weight side with almost the same molecular weight distribution being kept by the addition of isoprene as a fourth monomer and a substantially total amount of the active species at the terminal was converted into isoprene-derived carbanion. Then, 5.57 g (20.0 mmol) of 3-glycidoxypropyltriethoxysilane (GPTES) represented by the following formula (3):

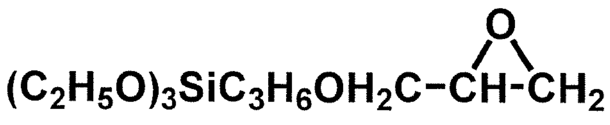

(3)

was added as a modifying agent and subjected to a modification reaction for 2 hours to obtain a polymer solution containing a modified vinylaromatic copolymer. After the completion of the polymerization reaction, 4.72 g (40.0 mmol) of succinic acid was added and stirred, and then filtration was performed.

GPTES was a modifying agent generating a hydroxyl group by a reaction of not only an alkoxysilyl group, but also a glycidyl group, with carbanion of an active species.

The obtained polymerization solution was concentrated by devolatilization and then dissolved in ethylcyclohexane, and neither a gel, nor a microgel was confirmed to be generated. Next, in order to remove unreacted TESPTADSP, methanol was added to such an ethylcyclohexane solution of a modified vinylaromatic copolymer to perform separation into two layers and remove a fraction soluble in methanol, and then such an ethylcyclohexane solution containing a modified vinylaromatic copolymer was concentrated by devolatilization and then dissolved in ethylcyclohexane. As a result, 23.06 g (yield: 93.5 wt%) of a modified vinylaromatic copolymer E-1 was obtained in solid content equivalent yield.

The analysis results of the modified vinylaromatic copolymer E-1 are shown in Table 2.

The obtained modified vinylaromatic copolymer E-1 had an Mn of 2750, an Mw of 7480, and an Mw/Mn of 2.72. It was confirmed by performing GC analysis, $^{13}$C-NMR and $^{1}$H-NMR analysis that the modified vinylaromatic copolymer E-1 contained 4.56% by mol (5.28 wt%) of a divinylbenzene-derived structural unit, 2.83% by mol (3.30 wt%) of an ethylvinylbenzene-derived structural unit, 56.23% by mol (52.26 wt%) of a structural unit derived from styrene, 27.26% by mol (16.57 wt%) of a structural unit derived from isoprene, and 9.10% by mol (22.58 wt%) of a structural unit derived from 3-glycidoxypropyltriethoxysilane (GPTES), and 2.23 modifying agents per molecule of the modified vinylaromatic copolymer were introduced thereinto. Since the crosslinked structural unit (a1) derived from the divinylaromatic compound represented by the formula (1) was 4.41% by mol (5.12 wt%), the degree of crosslinking (a1/a) was 0.97. The divinylbenzene-derived structural unit (a2) having a residual vinyl group, contained in the modified vinylaromatic copolymer (E-1), was 0.14% by mol (0.16 wt%) and a molar fraction of the vinyl group-containing structural unit (a2) to the sum of structural units (a) and (b) was 0.002. In addition, about 100% by mol of the structural unit derived from GPTES was bound to the structural unit derived from isoprene.

As a result of thermogravimetric measurement (TGA), the weight loss at 350°C ($TGA_{350}$) was 1.03 wt%. When a sample prepared by dissolving 0.5 g of the modified vinylaromatic copolymer (E-1) in 100 g of toluene was put into a quartz cell and the Haze (turbidity) thereof was measured using an integrating sphere type light transmittance measurement device with toluene as a reference sample, the Haze value was 0.04.

Synthetic Example 1 Synthesis of polyfunctional vinylaromatic copolymer (F-1)

In a 3.0-L reactor, 270.03 g of DVB-810 (1.680 mol of a divinylbenzene component and 0.394 mol of an ethylvinylbenzene (mixture of m-isomer and p-isomer) component), 660.49 g (4.226 mol)of diisobutylene (the following mixture),

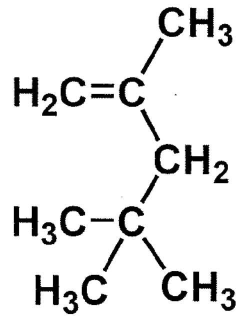 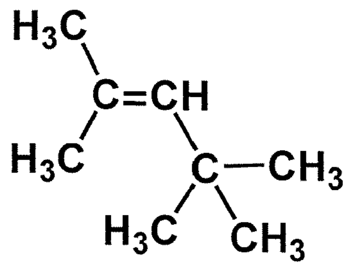

210 mmol (24.15 mL) of n-propylacetate, and 546.15 g (5.927 mol) of toluene were placed. At 70°C, 42.0 mmol of a boron trifluoride-diethyl ether complex (5.28 mL) was added to the reactor and reacted for 5.0 hours. After stopping the polymerization solution with a sodium hydrogen carbonate aqueous solution, an oil layer was washed with pure water three times and devolatilized at 60°C under reduced pressure, and furthermore dissolved in toluene, and thereafter a polymer fraction was reprecipitated by methanol, filtered, and dried to recover a copolymer, obtaining 281.1 g of a polyfunctional vinylaromatic copolymer F-1.

The obtained polyfunctional vinylaromatic copolymer (F-1) had an Mn of 1040, an Mw of 3310, and an Mw/Mn of 3.19. $^{13}C$-NMR and $^{1}H$-NMR analysis were performed, and the polyfunctional vinylaromatic copolymer (F-1) contained 45.2% by mol (48.4 wt%) of a divinylbenzene-derived structural unit, 7.7% by mol (8.3 wt%) of an ethylvinylbenzene-derived structural unit, and 47.0% by mol (43.3 wt%) of a structural unit derived from diisobutylene. Since the crosslinked structural unit (a1) derived from the divinylaromatic compound represented by the formula (1) was 19.4% by mol (20.8 wt%), the degree of crosslinking (a1/a) was 0.43. The divinylbenzene-derived structural unit (a2) having a residual vinyl group, contained in the polyfunctional vinylaromatic copolymer (F-1), was 25.8% by mol (27.6 wt%) and a molar fraction of the vinyl group-containing structural unit (a2) to the sum of the divinylbenzene-derived structural unit, the ethylvinylbenzene-derived structural unit, and the structural unit derived from diisobutylene was 0.276.

As a result of TMA measurement of a cured product, Tg was 188°C and the softening temperature was 280°C or more.

As a result of thermogravimetric measurement (TGA), the weight loss at 350°C ($TGA_{350}$) was 1.51 wt%. When a sample prepared by dissolving 0.5 g of the polyfunctional vinylaromatic copolymer (F-1) in 100 g of toluene was put into a quartz cell and the Haze (turbidity) thereof was measured using an integrating sphere type light transmittance measurement device with toluene as a reference sample, the Haze value was 0.04.

Example 4 Synthesis of modified vinylaromatic copolymer (G-1)

160 ml (124.6 g) of ethylcyclohexane and 0.61 ml (4.0 mmol) of N,N,N',N'-tetramethylethylenediamine were charged and 12.5 ml of a n-hexane solution containing 1.28 g (20.0 mmol) of n-butyllithium as pure content was added at 50°C, followed by the addition of a solution prepared by dissolving 4.66 g of the polyfunctional vinylaromatic copolymer (F-1) synthesized in Synthetic Example 1, dried in advance, in 40 ml (31.2 g) of ethylcyclohexane, to initiate synthesis of a polyfunctional initiator in the first stage. After the completion of the initiation reaction, a solution prepared by dissolving 16.36 g (80.0 mmol) of isoprene as a monomer in 40 ml (31.2 g) of ethylcyclohexane was added to a reactor, to initiate the polymerization in the second stage. After the completion of the polymerization reaction in the second stage, a small amount of the polymerization solution was sampled and subjected to GC analysis, and no unreacted monomer was observed and the polymerization conversion was confirmed to be almost 100%. GPC analysis was performed, and the copolymer on the completion of the polymerization in the second stage had an Mn of 2830, an Mw of 8450, and an Mw/Mn of 2.99. The GPC elution curve of the sample after the completion of the initiation reaction in the first stage and the elution curve of the sample after the completion of the polymerization in the second stage were compared, and it was thus confirmed that the GPC elution curve was shifted toward the higher molecular weight side with almost the same molecular weight distribution being kept by the addition of isoprene as a fourth monomer and a substantially total amount of the active species at the terminal was converted into isoprene-derived carbanion.

A solution prepared by dissolving 7.27 g (20.0 mmol) of 1-(3-triethoxysilylpropyl)-2,2,5,5-tetramethyl-1-aza-2,5-disilacyclopentane (TESPTADSP) as a modifying agent, in 40 ml (31.2 g) of ethylcyclohexane, was added, and subjected to a modification reaction for 2 hours to obtain a polymer solution containing a modified vinylaromatic copolymer. After the completion of the polymerization reaction, 4.72 g (40.0 mmol) of succinic acid was added and stirred, and then filtration was performed.

The obtained polymerization solution was concentrated by devolatilization and then dissolved in ethylcyclohexane, and neither a gel, nor a microgel was confirmed to be generated. Next, in order to remove unreacted TESPTADSP,

methanol was added to such an ethylcyclohexane solution of a modified vinylaromatic copolymer to perform separation into two layers and remove a fraction soluble in methanol, and then such an ethylcyclohexane solution containing a modified vinylaromatic copolymer was concentrated by devolatilization and then dissolved in ethylcyclohexane. As a result, 16.34 g (yield: 94.0 wt%) of a modified vinylaromatic copolymer G-1 was obtained in solid content equivalent yield.

The analysis results of the modified vinylaromatic copolymer G-1 are shown in Table 2.

The obtained modified vinylaromatic copolymer G-1 had an Mn of 3350, an Mw of 12200, and an Mw/Mn of 3.64. It was confirmed by performing GC analysis, $^{13}$C-NMR and $^{1}$H-NMR analysis that the modified vinylaromatic copolymer G-1 contained 12.76% by mol (13.70 wt%) of a divinylbenzene-derived structural unit, 2.18% by mol (2.34 wt%) of an ethylvinylbenzene-derived structural unit, 13.26% by mol (12.27 wt%) of a structural unit derived from diisobutylene, 58.93% by mol (33.10 wt%) of a structural unit derived from isoprene, and 12.87% by mol (38.59 wt%) of a structural unit derived from 1-(3-triethoxysilylpropyl)-2,2,5,5-tetramethyl-1-aza-2,5-disilacyclopentane (TESPTADSP), and 3.86 modifying agents per molecule of the modified vinylaromatic copolymer were introduced thereinto. Since the crosslinked structural unit (a1) derived from the divinylaromatic compound represented by the formula (1) was 12.38% (13.29 wt%), the degree of crosslinking (a1/a) was 0.97. The divinylbenzene-derived structural unit (a2) having a residual vinyl group, contained in the modified vinylaromatic copolymer (G-1), was 0.38% by mol (0.41 wt%) and a molar fraction of the vinyl group-containing structural unit (a2) to the sum of structural units (a) and (b) was 0.025. In addition, about 100% by mol of the structural unit derived from TESPTADSP was bound to the structural unit derived from isoprene.

As a result of thermogravimetric measurement (TGA), the weight loss at 350°C ($TGA_{350}$) was 1.47 wt%. When a sample prepared by dissolving 0.5 g of the modified vinylaromatic copolymer (G-1) in 100 g of toluene was put into a quartz cell and the Haze (turbidity) thereof was measured using an integrating sphere type light transmittance measurement device with toluene as a reference sample, the Haze value was 0.03.

Example 5 Synthesis of modified vinylaromatic copolymer (H-1)

120 ml (93.5 g) of ethylcyclohexane and 0.77 ml (4.0 mmol) of 2,2-di(2-tetrahydrofuryl)propane were charge and 12.5 ml of a n-hexane solution containing 1.28 g (20.0 mmol) of n-butyllithium as pure content was added at 50°C, followed by the addition of a mixture of 2.24 g of DVB-630 (10.6 mmol of a divinylbenzene (mixture of m-isomer and p-isomer) component and 6.63 mmol of an ethylvinylbenzene (mixture of m-isomer and p-isomer) component) and 12.79 g (122.8 mmol) of styrene, which had been cleared of impurities in advance, to initiate the polymerization in the first stage. The temperature of the reaction solution increased due to the polymerization heat, reaching a maximum temperature of 73°C. After the completion of the polymerization reaction, a small amount of the polymerization solution was sampled and analyzed by gas chromatograph (GC), and no unreacted monomer was observed and the polymerization conversion was confirmed to be almost 100%. GPC analysis was performed, and the copolymer on the completion of the polymerization in the first stage had an Mn of 2080, an Mw of 4390, and an Mw/Mn of 2.11. As an additional monomer, 9.54 g (140.0 mmol) of isoprene was added to the reactor, to initiate the polymerization in the second stage. After the completion of the polymerization reaction in the second stage, a small amount of the polymerization solution was sampled and subjected to GC analysis, and no unreacted monomer was observed and the polymerization conversion was confirmed to be almost 100%. GPC analysis was performed, and the copolymer on the completion of the polymerization in the second stage had an Mn of 2910, an Mw of 6630, and an Mw/Mn of 2.28. The GPC elution curve of the sample after the completion of the polymerization in the first stage and the elution curve of the sample after the completion of the polymerization in the second stage were compared, and it was thus confirmed that the GPC elution curve was shifted toward the higher molecular weight side with almost the same molecular weight distribution being kept by the addition of isoprene as an additional monomer and a substantially total amount of the active species at the terminal was converted into isoprene-derived carbanion. Then, 5.65 g (20.0 mmol) of 3-glycidoxypropyltriethoxysilane (GPTES) was added as a modifying agent and subjected to a modification reaction for 2 hours to obtain a polymer solution containing a modified vinylaromatic copolymer. After the completion of the polymerization reaction, 4.72 g (40.0 mmol) of succinic acid was added and stirred, and then filtration was performed.

The obtained polymerization solution was concentrated by devolatilization and then dissolved in ethylcyclohexane, and neither a gel, nor a microgel was confirmed to be generated. Next, in order to remove unreacted GPTES, methanol was added to such an ethylcyclohexane solution of a modified vinylaromatic copolymer to perform separation into two layers and remove a fraction soluble in methanol, and then such an ethylcyclohexane solution containing a modified vinylaromatic copolymer was concentrated by devolatilization and then dissolved in ethylcyclohexane. As a result, 29.00 g (yield: 96.0 wt%) of a modified vinylaromatic copolymer H-1 was obtained in solid content equivalent yield.

The analysis results of the modified vinylaromatic copolymer H-1 are shown in Table 2.

The obtained modified vinylaromatic copolymer H-1 had an Mn of 3470, an Mw of 9260, and an Mw/Mn of 2.67. It was confirmed by performing GC analysis, $^{13}$C-NMR and $^{1}$H-NMR analysis that the modified vinylaromatic copolymer H-1 contained 3.53% by mol (4.68 wt%) of a divinylbenzene-derived structural unit, 2.21% by mol (2.93 wt%) of an ethylvinylbenzene-derived structural unit, 40.88% by mol (43.35 wt%) of a structural unit derived from styrene, 46.62%

by mol (32.33 wt%) of a structural unit derived from isoprene, and 6.76% by mol (16.71 wt%) of a structural unit derived from 3-glycidoxypropyltriethoxysilane (GPTES), and 2.33 modifying agents per molecule of the modified vinylaromatic copolymer were introduced thereinto. Since the crosslinked structural unit (a1) derived from the divinylaromatic compound represented by the formula (1) was 3.39% by mol (4.49 wt%), the degree of crosslinking (a1/a) was 0.96. The divinylbenzene-derived structural unit (a2) having a residual vinyl group, contained in the modified vinylaromatic copolymer (H-1), was 0.14% by mol (0.19 wt%) and a molar fraction of the vinyl group-containing structural unit (a2) to the sum of structural units (a) and (b) was 0.0015. In addition, about 100% by mol of the structural unit derived from GPTES was bound to the structural unit derived from isoprene.

As a result of thermogravimetric measurement (TGA), the weight loss at 350°C ($TGA_{350}$) was 1.17 wt%. When a sample prepared by dissolving 0.5 g of the modified vinylaromatic copolymer (H-1) in 100 g of toluene was put into a quartz cell and the Haze (turbidity) thereof was measured using an integrating sphere type light transmittance measurement device with toluene as a reference sample, the Haze value was 0.04.

[Table 2]

| | Ex. 3 | Ex. 4 | Ex. 5 |
|---|---|---|---|
| Modified vinylaromatic copolymer | E-1 | G-1 | H-1 |
| (a) Divinylbenzene (wt%) | 5.28 | 13.70 | 4.68 |
| (b) Ethylvinylbenzene (wt%) | 3.30 | 2.34 | 2.93 |
| (b) Styrene (wt%) | 52.26 | | 43.35 |
| Diisoprene (wt%) | | 12.27 | |
| (c) Isoprene (wt%) | 16.57 | 33.10 | 32.33 |
| Modifying agent | GPTES | TESPTADSP | GPTES |
| Modifying agent (wt%) | 22.58 | 38.59 | 16.71 |
| Degree of crosslinking (a1/a) (%) | 0.97 | 0.97 | 0.96 |
| Residual vinyl fraction (a2/(a+b+c)) (%) | 0.002 | 0.004 | 0.002 |
| Amount of introduction of modifying agent per molecule of modified vinylaromatic copolymer (agents/molecule) | 2.23 | 3.86 | 2.33 |
| Functional group bound to conjugated diene unit (% by mol) | ≈100 | ≈100 | ≈100 |
| Mn (g/mol) | 2750 | 3350 | 3470 |
| Mw (g/mol) | 7480 | 12200 | 9260 |
| Mw/Mn ( - ) | 2.72 | 3.64 | 2.67 |
| Solvent solubility (cyclohexane) | ○ | ○ | ○ |
| $TGA_{350}$ (wt%) | 1.03 | 1.47 | 1.17 |
| Haze ( - ) | 0.04 | 0.03 | 0.04 |

Example 6 Synthesis of modified vinylaromatic copolymer (I-1)

120 ml (93.5 g) of ethylcyclohexane and 0.77 ml (4.0 mmol) of 2,2-di(2-tetrahydrofuryl)propane were charged, and 12.5 ml of a n-hexane solution containing 2.14 g (20.0 mmol) of lithium diisopropylamide (LDIPA) represented by the following formula (4) as a polymerization initiator, as pure content,

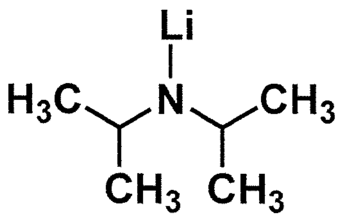

(4)

was added at 50°C, followed by the addition of a mixture of 2.24 g of DVB-630 (10.6 mmol of a divinylbenzene (mixture of m-isomer and p-isomer) component and 6.63 mmol of an ethylvinylbenzene (mixture of m-isomer and p-isomer) component) and 12.79 g (122.8 mmol) of styrene, which had been cleared of impurities in advance, to initiate the polymerization in the first stage. The temperature of the reaction solution increased due to the polymerization heat, reaching a maximum temperature of 77°C. After the completion of the polymerization reaction, a small amount of the polymerization solution was sampled and analyzed by gas chromatograph (GC), and no unreacted monomer was observed and the polymerization conversion was confirmed to be almost 100%. GPC analysis was performed, and the copolymer on the completion of the polymerization in the first stage had an Mn of 2010, an Mw of 3780, and an Mw/Mn of 1.98. As an additional monomer, 9.54 g (140.0 mmol) of isoprene was added to the reactor, to initiate the polymerization in the second stage. After the completion of the polymerization reaction in the second stage, a small amount of the polymerization solution was sampled and subjected to GC analysis, and no unreacted monomer was observed and the polymerization conversion was confirmed to be almost 100%. GPC analysis was performed, and the copolymer on the completion of the polymerization in the second stage had an Mn of 3020, an Mw of 6730, and an Mw/Mn of 2.23. The GPC elution curve of the sample after the completion of the polymerization in the first stage and the elution curve of the sample after the completion of the polymerization in the second stage were compared, and it was thus confirmed that the GPC elution curve was shifted toward the higher molecular weight side with almost the same molecular weight distribution being kept by the addition of isoprene as a fourth monomer and a substantially total amount of the active species at the terminal was converted into isoprene-derived carbanion. Then, 5.65 g (20.0 mmol) of 3-glycidoxypropyltriethoxysilane (GPTES) was added as a modifying agent and subjected to a modification reaction for 2 hours to obtain a polymer solution containing a modified vinylaromatic copolymer. After the completion of the polymerization reaction, 4.72 g (40.0 mmol) of succinic acid was added and stirred, and then filtration was performed.

The obtained polymerization solution was concentrated by devolatilization and then dissolved in ethylcyclohexane, and neither a gel, nor a microgel was confirmed to be generated. Next, in order to remove unreacted GPTES, methanol was added to such an ethylcyclohexane solution of a modified vinylaromatic copolymer to perform separation into two layers and remove a fraction soluble in methanol, and then such an ethylcyclohexane solution containing a modified vinylaromatic copolymer was concentrated by devolatilization and then dissolved in ethylcyclohexane. As a result, 30.35 g (yield: 94.2 wt%) of a modified vinylaromatic copolymer I-1 was obtained in solid content equivalent yield.

The analysis results of the modified vinylaromatic copolymer I-1 are shown in Table 3.

The obtained modified vinylaromatic copolymer I-1 had an Mn of 3630, an Mw of 10090, and an Mw/Mn of 2.78. It was confirmed by performing GC analysis, $^{13}C$-NMR and $^{1}H$-NMR analysis that the modified vinylaromatic copolymer I-1 contained 3.31% by mol (4.38 wt%) of a divinylbenzene-derived structural unit, 2.07% by mol (2.74 wt%) of an ethylvinylbenzene-derived structural unit, 40.59% by mol (38.33 wt%) of a structural unit derived from styrene, 43.71% by mol (30.28 wt%) of a structural unit derived from isoprene, and 6.33% by mol (15.65 wt%) of a structural unit derived from 3-glycidoxypropyltriethoxysilane (GPTES), and 2.33 modifying agents per molecule of the modified vinylaromatic copolymer were introduced thereinto. Since the crosslinked structural unit (a1) derived from the divinylaromatic compound represented by the formula (1) was 3.21% by mol (4.25 wt%), the degree of crosslinking (a1/a) was 0.97. The divinylbenzene-derived structural unit (a2) having a residual vinyl group, contained in the modified vinylaromatic copolymer (I-1), was 0.10% by mol (0.13 wt%) and a molar fraction of the vinyl group-containing structural unit (a2) to the sum of structural units (a) and (b) was 0.0011. In addition, about 100% by mol of the structural unit derived from GPTES was bound to the structural unit derived from isoprene.

As a result of thermogravimetric measurement (TGA), the weight loss at 350°C ($TGA_{350}$) was 1.21 wt%. When a sample prepared by dissolving 0.5 g of the modified vinylaromatic copolymer (I-1) in 100 g of toluene was put into a quartz cell and the Haze (turbidity) thereof was measured using an integrating sphere type light transmittance measurement device with toluene as a reference sample, the Haze value was 0.05.

[Table 3]

| | Ex. 6 |
|---|---|
| Modified vinylaromatic copolymer | 1-1 |
| Initiator | LDIPA |
| Initiator residue(wt%) | 6.36 |
| (a) Divinylbenzene (wt%) | 4.38 |
| (b) Ethylvinylbenzene (wt%) | 2.74 |
| (b) Styrene (wt%) | 40.59 |
| (c) Isoprene (wt%) | 30.28 |

(continued)

| | Ex. 6 |
|---|---|
| Modifying agent | GPTES |
| Modifying agent (wt%) | 15.65 |
| Degree of crosslinking (a1/a) (%) | 0.97 |
| Residual vinyl fraction (a2/(a+b+c)) (%) | 0.001 |
| Amount of introduction of modifying agent per molecule of modified vinylaromatic copolymer (agents/molecule) | 2.29 |
| Functional group bound to conjugated diene unit (% by mol) | ≈100 |
| Mn (g/mol) | 3630 |
| Mw (g/mol) | 10090 |
| Mw/Mn ( - ) | 2.78 |
| Solvent solubility (cyclohexane) | ○ |
| $TGA_{350}$ (wt%) | 1.21 |
| Haze ( - ) | 0.05 |

Example 7 Synthesis of modified conjugated diene-based copolymer (A-2)

In a nitrogen-substituted autoclave reactor, 580 g of cyclohexane and 5 g of a cyclohexane solution containing 30.7 mg (0.16 mmol) of 2,2-di(2-tetrahydrofuryl)propane were charged. At 50°C, 15 g of a cyclohexane solution containing 51.2 mg (0.80 mmol) of n-butyllithium as pure content was added to the reactor, followed by the addition of 34.29 g of styrene and 80.00 g of 1,3-butadiene, which had been cleared of impurities, to initiate the polymerization. The temperature of the reaction solution increased due to the polymerization heat, reaching a maximum temperature of 78°C. After the completion of the polymerization reaction, 15 g of a cyclohexane solution containing 0.527 g of the modified vinylaromatic copolymer (A-1) obtained in Example 1 was added as a SBR modifying agent modifying the obtained styrene-butadiene rubber (SBR), to carry out a modification reaction, and the modification reaction was carried out for 30 minutes at a temperature condition of 60°C to obtain a polymeric solution.

Further, 0.40 mmol of bis(3-trimethoxysilylpropyl)methylamine was added to the polymeric solution and subjected to a modification reaction for 30 minutes to obtain a polymer solution containing a modified conjugated diene-based copolymer.

After 0.045 g of 2,6-di-tert-4-hydroxytoluene was added as an antioxidant to the obtained polymerization solution, the solvent was removed by steam stripping, followed by vacuum drying to obtain a modified conjugated diene-based copolymer (modified SBR) A-2.

The analysis results of the modified conjugated diene-based copolymer A-2 are shown in Table 4.

Comparative Example 3 Synthesis of modified conjugated diene-based copolymer (B-2)

In a nitrogen-substituted autoclave reactor, 580 g of cyclohexane and 5 g of a cyclohexane solution containing 30.7 mg (0.16 mmol) of 2,2-di(2-tetrahydrofuryl)propane were charged. At 50°C, 15 g of a cyclohexane solution containing 51.2 mg (0.80 mmol) of n-butyllithium as pure content was added to the reactor, followed by the addition of 34.29 g of styrene and 80.00 g of 1,3-butadiene, which had been cleared of impurities in advance, to initiate the polymerization. The temperature of the reaction solution increased due to the polymerization heat, reaching a maximum temperature of 79°C. After the completion of the polymerization reaction, 15 g of a cyclohexane solution containing 0.379 g of the modified vinylaromatic copolymer (B-1) obtained in Comparative Example 1 was added as a SBR modifying agent, to carry out a modification reaction, and the modification reaction was carried out for 30 minutes at a temperature condition of 60°C to obtain a polymeric solution.

Further, 0.40 mmol of bis(3-trimethoxysilylpropyl)methylamine was added to the polymeric solution and subjected to a modification reaction for 30 minutes to obtain a polymer solution containing a modified conjugated diene-based copolymer.

After 0.045 g of 2,6-di-tert-4-hydroxytoluene was added as an antioxidant to the obtained polymerization solution, the solvent was removed by steam stripping, followed by vacuum drying to obtain a modified conjugated diene-based

copolymer B-2.

The analysis results of the modified conjugated diene-based copolymer (modified SBR) B-2 are shown in Table 4.

Comparative Example 4 Synthesis of modified conjugated diene-based copolymer (C-2)

In a nitrogen-substituted autoclave reactor, 580 g of cyclohexane and 5 g of a cyclohexane solution containing 30.7 mg (0.16 mmol) of 2,2-di(2-tetrahydrofuryl)propane were charged. At 50°C, 15 g of a cyclohexane solution containing 51.2 mg (0.80 mmol) of n-butyllithium as pure content was added to the reactor, followed by the addition of 34.29 g of styrene and 80.00 g of 1,3-butadiene, which had been cleared of impurities in advance, to initiate the polymerization. The temperature of the reaction solution increased due to the polymerization heat, reaching a maximum temperature of 79°C. After the completion of the polymerization reaction, 15 g of a cyclohexane solution containing 0.466 g of the modified vinylaromatic copolymer (C-1) obtained in Comparative Example 2 was added as a SBR modifying agent, to carry out a modification reaction, and the modification reaction was carried out for 30 minutes at a temperature condition of 60°C to obtain a polymeric solution.

Further, 0.40 mmol of bis(3-trimethoxysilylpropyl)methylamine was added to the polymeric solution and subjected to a modification reaction for 30 minutes to obtain a polymer solution containing a modified conjugated diene-based copolymer.

After 0.045 g of 2,6-di-tert-4-hydroxytoluene was added as an antioxidant to the obtained polymerization solution, the solvent was removed by steam stripping, followed by vacuum drying to obtain a modified conjugated diene-based copolymer C-2.

The analysis results of the modified conjugated diene-based copolymer (modified SBR) C-2 are shown in Table 4.

Example 8 Synthesis of modified conjugated diene-based copolymer (D-2)

In a nitrogen-substituted autoclave reactor, 580 g of cyclohexane and 5 g of a cyclohexane solution containing 30.7 mg (0.16 mmol) of 2,2-di(2-tetrahydrofuryl)propane were charged. At 50°C, 15 g of a cyclohexane solution containing 51.2 mg (0.80 mmol) of n-butyllithium as pure content was added to the reactor, followed by the addition of 34.29 g of styrene and 80.00 g of 1,3-butadiene, which had been cleared of impurities in advance, to initiate the polymerization. The temperature of the reaction solution increased due to the polymerization heat, reaching a maximum temperature of 81°C. After the completion of the polymerization reaction, 15 g of a cyclohexane solution containing 0.363 g of the modified vinylaromatic copolymer (D-1) obtained in Example 2 was added as a SBR modifying agent modifying the obtained styrene-butadiene rubber (SBR), to carry out a modification reaction, and the modification reaction was carried out for 30 minutes at a temperature condition of 60°C to obtain a polymeric solution.

After 0.045 g of 2,6-di-tert-4-hydroxytoluene was added as an antioxidant to the obtained polymerization solution, the solvent was removed by steam stripping, followed by vacuum drying to obtain a modified conjugated diene-based copolymer D-2.

The analysis results of the modified conjugated diene-based copolymer (modified SBR) D-2 are shown in Table 4.

Example 9 Synthesis of modified conjugated diene-based copolymer (E-2)

In a nitrogen-substituted autoclave reactor, 580 g of cyclohexane and 5 g of a cyclohexane solution containing 30.7 mg (0.16 mmol) of 2,2-di(2-tetrahydrofuryl)propane were charged. At 50°C, 15 g of a cyclohexane solution containing 51.2 mg (0.80 mmol) of n-butyllithium as pure content was added to the reactor, followed by the addition of 34.29 g of styrene and 80.00 g of 1,3-butadiene, which had been cleared of impurities in advance, to initiate the polymerization. The temperature of the reaction solution increased due to the polymerization heat, reaching a maximum temperature of 81°C. After the completion of the polymerization reaction, 15 g of a cyclohexane solution containing 0.493 g of the modified vinylaromatic copolymer (E-1) obtained in Example 3 was added as a SBR modifying agent modifying the obtained styrene-butadiene rubber (SBR), to carry out a modification reaction, and the modification reaction was carried out for 30 minutes at a temperature condition of 60°C to obtain a polymeric solution.

Further, 0.40 mmol of bis(3-trimethoxysilylpropyl)methylamine was added to the polymeric solution and subjected to a modification reaction for 30 minutes to obtain a polymer solution containing a modified conjugated diene-based copolymer.

After 0.045 g of 2,6-di-tert-4-hydroxytoluene was added as an antioxidant to the obtained polymerization solution, the solvent was removed by steam stripping, followed by vacuum drying to obtain a modified conjugated diene-based copolymer E-2. The analysis results of the modified conjugated diene-based copolymer (modified SBR) E-2 are shown in Table 5.

Example 10 Synthesis of modified conjugated diene-based copolymer (G-2)

In a nitrogen-substituted autoclave reactor, 580 g of cyclohexane and 5 g of a cyclohexane solution containing 30.7 mg (0.16 mmol) of 2,2-di(2-tetrahydrofuryl)propane were charged. At 50°C, 15 g of a cyclohexane solution containing 51.2 mg (0.80 mmol) of n-butyllithium as pure content was added to the reactor, followed by the addition of 34.29 g of styrene and 80.00 g of 1,3-butadiene, which had been cleared of impurities, to initiate the polymerization. The temperature of the reaction solution increased due to the polymerization heat, reaching a maximum temperature of 81°C. After the completion of the polymerization reaction, 15 g of a cyclohexane solution containing 0.348 g of the modified vinylaromatic copolymer (G-1) obtained in Example 4 was added as a SBR modifying agent modifying the obtained styrene-butadiene rubber (SBR), to carry out a modification reaction, and the modification reaction was carried out for 30 minutes at a temperature condition of 60°C to obtain a polymeric solution.

Further, 0.40 mmol of bis(3-trimethoxysilylpropyl)methylamine was added to the polymeric solution and subjected to a modification reaction for 30 minutes to obtain a polymer solution containing a modified conjugated diene-based copolymer.

After 0.045 g of 2,6-di-tert-4-hydroxytoluene was added as an antioxidant to the obtained polymerization solution, the solvent was removed by steam stripping, followed by vacuum drying to obtain a modified conjugated diene-based copolymer G-2.

The analysis results of the modified conjugated diene-based copolymer (modified SBR) G-2 are shown in Table 5.

Example 11 Synthesis of modified conjugated diene-based copolymer (H-2)

In a nitrogen-substituted autoclave reactor, 580 g of cyclohexane and 5 g of a cyclohexane solution containing 30.7 mg (0.16 mmol) of 2,2-di(2-tetrahydrofuryl)propane were charged. At 50°C, 15 g of a cyclohexane solution containing 51.2 mg (0.80 mmol) of n-butyllithium as pure content was added to the reactor, followed by the addition of 34.29 g of styrene and 80.00 g of 1,3-butadiene, which had been cleared of impurities in advance, to initiate the polymerization. The temperature of the reaction solution increased due to the polymerization heat, reaching a maximum temperature of 81°C. After the completion of the polymerization reaction, 15 g of a cyclohexane solution containing 0.596 g of the modified vinylaromatic copolymer (H-1) obtained in Example 5 was added as a SBR modifying agent modifying the obtained styrene-butadiene rubber (SBR), to carry out a modification reaction, and the modification reaction was carried out for 30 minutes at a temperature condition of 60°C to obtain a polymeric solution.

Further, 0.40 mmol of bis(3-trimethoxysilylpropyl)methylamine was added to the polymeric solution and subjected to a modification reaction for 30 minutes to obtain a polymer solution containing a modified conjugated diene-based copolymer.

After 0.045 g of 2,6-di-tert-4-hydroxytoluene was added as an antioxidant to the obtained polymerization solution, the solvent was removed by steam stripping, followed by vacuum drying to obtain a modified conjugated diene-based copolymer H-2. The analysis results of the modified conjugated diene-based copolymer (modified SBR) H-2 are shown in Table 5.

[Table 4]

| | Ex. 7 | Comp. Ex. 3 | Comp. Ex. 4 | Ex. 8 |
|---|---|---|---|---|
| Modified vinylaromatic copolymer (SBR-Modifying agent) | A-1 | B-1 | C-1 | D-1 |
| Modified conjugated diene copolymer (modified SBR) | A-2 | B-2 | C-2 | D-2 |
| Mw ($\times 10^4$) | 63 | 39 | N.A. | 61 |
| Area (%) of multi-branched component | 60.3 | 15.1 | N.A. | 51.3 |
| Area (%) corresponding to 3Mp or more | 35.7 | 3.2 | N.A. | 21.6 |
| Vinyl bond amount (%) | 41 | 45 | 43 | 43 |
| Mooney viscosity | 67 | 51 | 56 | 62 |
| Gel fraction | ○ | Δ | × | ○ |
| Haze ( - ) | 0.02 | 0.13 | 7.64 | 0.04 |

[Table 5]

| | Ex. 9 | Ex. 10 | Ex. 11 |
|---|---|---|---|
| Modified vinylaromatic copolymer (SBR-Modifying agent) | E-1 | G-1 | H-1 |
| Modified conjugated diene copolymer (modified SBR) | E-2 | G-2 | H-2 |
| Mw ($\times 10^4$) | 71 | 67 | 68 |
| Area (%) of multi-branched component | 72.4 | 67.3 | 70.3 |
| Area (%) corresponding to 3Mp or more | 45.6 | 42.1 | 41.8 |
| Vinyl bond amount (%) | 41 | 43 | 44 |
| Mooney viscosity | 74 | 71 | 70 |
| Gel fraction | ○ | ○ | ○ |
| Haze (-) | 0.03 | 0.04 | 0.03 |

Example 12

The modified conjugated diene-based copolymer (modified SBR) A-2 obtained in Example 7, a process oil, carbon black, zinc oxide, stearic acid, and an anti-aging agent were blended and kneaded using Labo Plastomill at 155°C and 60 rpm for 4 minutes.

Sulfur and a vulcanization accelerator were added to the kneaded product, and the mixture was kneaded using a Labo Plastomill at 70°C and 60 rpm for 1 minute and vulcanized to obtain a crosslinked rubber A-3.

The blending proportion of each additive is shown in Table 6, and physical properties of the obtained crosslinked rubbers are shown in Table 7.

[Table 6]

| | |
|---|---|
| Copolymer rubber | 100.0 |
| Silica | 55.0 |
| Carbon black | 5.0 |
| Zinc oxide | 3.0 |
| Stearic acid | 2.0 |
| Anti-aging agent | 3.5 |
| Sulfur | 2.0 |
| Vulcanization accelerator A | 0.8 |
| Vulcanization accelerator B | 0.4 |

Additives used are as follows.

Silica: ULTRASIL 7000 manufactured by Degussa AG
Carbon black: Niteron #200IS, manufactured by Nippon Steel Chemical Carbon Co., Ltd.
Zinc oxide: zinc oxide Type 2, manufactured by Sakai Chemical Industry Co., Ltd.
Stearic acid: manufactured by FUJIFILM Wako Pure Chemical Corporation
Anti-aging agent: Nocrac 6C, manufactured by Ouchi Shinko Chemical Industrial Co., Ltd.
Sulfur: sulfur powder JIS Type 2, manufactured by Tsurumi Chemical Industry Co., Ltd.
Vulcanization accelerator A: NOCCELER CZ-G, manufactured by Ouchi Shinko Chemical Industrial Co., Ltd.
Vulcanization accelerator B: NOCCELER DP, manufactured by Ouchi Shinko Chemical Industrial Co., Ltd.

Examples 13 and 14, and Comparative Examples 5 and 6

Crosslinked rubbers B-3, C-3, D-3, and G-3 were obtained in the same manner as in Example 12, except that

the modified conjugated diene-based copolymer (modified SBR) B-2, C-2, D-2 or G-2 synthesized in Example 8, Example 10, Comparative Example 3 or Comparative Example 4 was used in place of the modified conjugated diene-based copolymer (modified SBR) A-2.

Physical properties of the obtained crosslinked rubbers are shown in Table 7.

[Table 7]

| | Modified conjugated diene copolymer | Crosslinked rubber | Index of bound rubber amount | Index of tensile strength | Index of wear resistance |
|---|---|---|---|---|---|
| Ex. 12 | A-2 | A-3 | 112 | 126 | 121 |
| Comp. Ex. 5 | B-2 | B-3 | 100 | 100 | 100 |
| Comp. Ex. 6 | C-2 | C-3 | 102 | 87 | 98 |
| Ex. 13 | D-2 | D-3 | 108 | 124 | 119 |
| Ex. 14 | G-2 | G-3 | 115 | 118 | 126 |

As clear from Table 7, each crosslinked rubber using the modified conjugated diene copolymers (modified SBR) of Examples was excellent in bound rubber index as compared with Comparative Examples, and therefore was a material having improved inorganic filling agent dispersibility and loss during traveling, having excellent tensile strength and wear resistance, and being capable of contributing to achievement of both strength and wear resistance.

Industrial Applicability

The modified vinylaromatic copolymer of the present invention is useful particularly in a modifying agent for conjugated diene-based copolymers (SBR and the like). Crosslinked rubber obtained by incorporating a filler into the obtained modified conjugated diene-based copolymer (modified SBR or the like) to perform crosslinking has excellent filler dispersibility and excellent mechanical strength and wear resistance, and is thus useful in an elastomer material for tires (treads), antiseismic rubber, rubber hoses, rubber rollers, footwear materials, and the like.

The modified vinylaromatic copolymer of the present invention is also useful in a dielectric material for low dielectric substrates, an insulating material, a heat-resistant material, a structural material, an adhesive, a sealant, paint, a coating agent, a sealing material, a print ink, a dispersant, or the like in the fields of electrical and electronic industries, spacecraft and aircraft industries, architecture and construction industries, and the like. A curable resin composition thereof can also be processed into a film, a sheet, and a prepreg, and then utilized not only in a plastic optical component, a touch panel, a flat display, a film liquid crystal device, and the like, but also in any of various optical devices including an optical waveguide and an optical lens. Such a curable resin composition can also be used as a modifier for modification of characteristics such as heat resistance, dielectric characteristics, bonding/adhesion, and optical characteristics of a thermoplastic resin or a curable resin composition.

## Claims

**1.** A modified vinylaromatic copolymer comprising a structural unit (a) derived from a divinylaromatic compound, a structural unit (b) derived from a monovinylaromatic compound, and a structural unit (c) derived from a conjugated diene compound, wherein

95% by mol or more of the structural unit (a) is a crosslinked structural unit (a1) represented by the following formula (1):

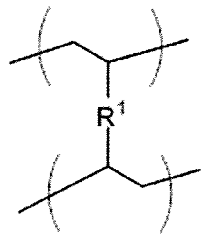

(1)

wherein R1 represents an aromatic hydrocarbon group having 6 to 30 carbon atoms; and
the copolymer is modified by at least one functional group selected from the group consisting of an amino group, an alkoxysilyl group, and a hydroxyl group, the average number of functional groups per molecule is 2.0 or more, and 30% by mol or more of the functional group is bound to the structural unit (c) derived from a conjugated diene compound to provide modification, and a number average molecular weight Mn is 500 to 30,000.

**2.** The modified vinylaromatic copolymer according to claim 1, comprising 0.5% by mol or more and 45.0% by mol or less of the structural unit (a) derived from a divinylaromatic compound, 0.5% by mol or more and 99.0% by mol or less of the structural unit (b) derived from a monovinylaromatic compound, and 0.5% by mol or more and 99.0% by mol or less of the structural unit (c) derived from a conjugated diene compound.

**3.** The modified vinylaromatic copolymer according to claim 1, wherein a molecular weight distribution (Mw/Mn) represented by a ratio of a weight average molecular weight Mw to the number average molecular weight Mn is 10.0 or less.

**4.** The modified vinylaromatic copolymer according to claim 1, wherein the average number of functional groups per molecule is in a range from 2 to 20.

**5.** The modified vinylaromatic copolymer according to claim 1, wherein the monovinylaromatic compound is one or more monomers selected from the group consisting of styrene, vinylnaphthalene, vinylbiphenyl, m-methylstyrene, p-methylstyrene, o,p-dimethylstyrene, m-ethylvinylbenzene, indene, and p-ethylvinylbenzene.

**6.** A method for producing the modified vinylaromatic copolymer according to any of claims 1 to 5, comprising

a polymerization step of copolymerizing the divinylaromatic compound, the monovinylaromatic compound and the conjugated diene-based compound, by use of an alkali metal compound or an alkaline earth metal compound as an anionic polymerization initiator, to obtain a vinylaromatic copolymer having a branched structure and an active terminal, and
a terminal modification step of reacting a compound having at least one functional group selected from the group consisting of an amino group, an alkoxysilyl group and a hydroxyl group, or a precursor compound thereof with the active terminal of the vinylaromatic copolymer, to form a functional group.

**7.** A modified conjugated diene-based copolymer obtained by reacting the modified vinylaromatic copolymer according to any one of claims 1 to 5 with a polymer of a conjugated diene compound, or a copolymer of a conjugated diene compound and an aromatic vinyl compound.

**8.** The modified conjugated diene-based copolymer according to claim 7, comprising 0.001 to 6% by weight of a structural unit (A1) derived from a modified vinylaromatic copolymer, 29 to 99.999% by weight of a structural unit (B1) derived from a conjugated diene compound, and 0 to 70% by weight of a structural unit (C1) derived from an aromatic vinyl compound.

**9.** The modified conjugated diene-based copolymer according to claim 7, wherein an area of a region corresponding to a number average molecular weight (Mn) three times or more of the number average molecular weight (Mn) at a peak at the lowest molecular weight side is 10% or more based on a total area of 100% in a differential molecular weight distribution curve obtained by gel permeation chromatography (GPC) measurement.

**10.** A resin composition comprising 0.5 to 200 parts by weight of at least one reinforcing filling agent selected from the group consisting of a silica-based inorganic filling agent, metal oxide, metal hydroxide and carbon black based on 100 parts by weight of the modified conjugated diene-based copolymer according to claim 7.

**11.** The resin composition according to claim 10, further comprising a crosslinking agent.

**12.** A crosslinked resin product obtained by crosslinking the resin composition according to claim 11.

**13.** A structural member comprising the crosslinked resin product according to claim 12.

Fig. 1

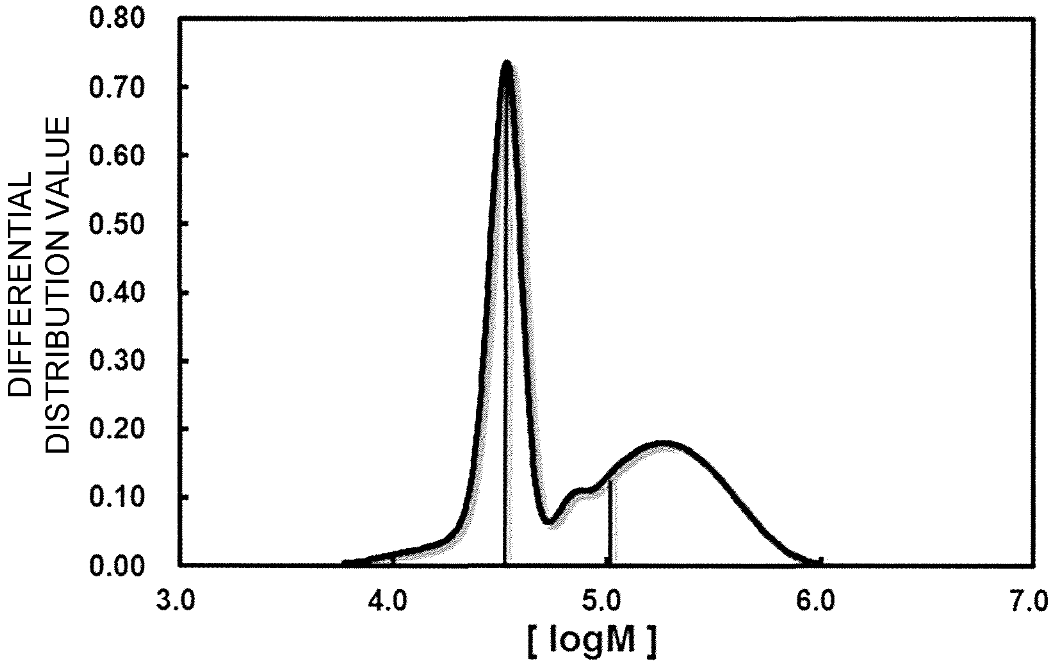
0.80
0.70
0.60
0.50
0.40
0.30
0.20
0.10
0.00
DIFFERENTIAL DISTRIBUTION VALUE
3.0
4.0
5.0
6.0
7.0
[ logM ]

**INTERNATIONAL SEARCH REPORT**

International application No.
**PCT/JP2022/044472**

**A. CLASSIFICATION OF SUBJECT MATTER**

***C08C 19/00***(2006.01)i; ***C08F 4/44***(2006.01)i; ***C08F 212/00***(2006.01)i; ***C08F 236/04***(2006.01)i; ***C08K 3/013***(2018.01)i
FI: C08C19/00; C08F4/44; C08F212/00; C08F236/04; C08K3/013

According to International Patent Classification (IPC) or to both national classification and IPC

**B. FIELDS SEARCHED**

Minimum documentation searched (classification system followed by classification symbols)

C08C19/00; C08F4/44; C08F212/00; C08F236/04; C08K3/013

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/262371 A1 (NIPPON STEEL CHEMICAL & MATERIAL CO., LTD.) 30 December 2020 (2020-12-30)<br>claims, paragraphs [0091]-[0236], examples | 1-13 |
| A | JP 2013-155268 A (JSR CORP) 15 August 2013 (2013-08-15)<br>entire text | 1-13 |
| A | WO 03/029299 A1 (JSR CORPORATION) 10 April 2003 (2003-04-10)<br>entire text | 1-13 |
| A | WO 2020/067336 A1 (NIPPON STEEL CHEMICAL & MATERIAL CO., LTD.) 02 April 2020 (2020-04-02)<br>entire text | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/044472**

| Patent document cited in search report | Publication date (day/month/year) | Patent family member(s) | Publication date (day/month/year) |
|---|---|---|---|
| WO 2020/262371 A1 | 30 December 2020 | EP 4005819 A1<br>claims, paragraphs [0137]-[0341], examples<br>CN 113966350 A<br>KR 10-2022-0025802 A<br>TW 202108640 A | |
| JP 2013-155268 A | 15 August 2013 | (Family: none) | |
| WO 03/029299 A1 | 10 April 2003 | US 2004/0254301 A1<br>whole document<br>EP 1457501 A1<br>KR 10-0932356 B1<br>CN 1578790 A | |
| WO 2020/067336 A1 | 02 April 2020 | US 2022/0049034 A1<br>whole document<br>EP 3858877 A1<br>CN 112771089 A<br>KR 10-2021-0068460 A<br>TW 202026323 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003073434 A
- JP 2004517202 A
- JP 2005213381 A
- WO 2002000779 A
- JP 2013155268 A
- JP 7207029 A
- JP 2016530361 A
- JP 8259584 A
- JP 2012092197 A
- WO 2018084128 A
- JP 2004123873 A
- JP 2018039995 A
- WO 2018181842 A
- WO 202067336 A
- JP 2001131227 A
- WO 2007034785 A
- WO 2008013090 A
- WO 2011040312 A
- WO 2011129425 A
- JP 2011132307 A